# FASCICULE DE BREVET EUROPEEN

(11) **EP 3 776 687 B1**
(45) Date de publication et mention de la délivrance du brevet: **12.01.2022**
(21) Numéro de dépôt: 19716886.7
(22) Date de dépôt: 08.04.2019
(51) Int. Cl.: H01M 50/20

(54) **UNITE DE BATTERIE AVEC DES MOYENS DE CONTROLE DE TEMPERATURE INTEGRES**
BATTERIEEINHEIT MIT INTEGRIERTEN MITTELN ZUR TEMPERATURSTEUERUNG
BATTERY UNIT WITH INTEGRATED TEMPERATURE CONTROL MEANS

(30) Priorité: 10.04.2018 FR 1853131; 04.07.2018 FR 1856167
(43) Date de publication de la demande: 17.02.2021
(73) Titulaire: Sogefi Air & Cooling (SAS), 78280 Guyancourt (FR)
(72) Inventeur: BECKER, Nicolas, 68320 PORTE-DU-RIED (FR); FLORANC, Alexandre, 68280 LOGELHEIM (FR)
(74) Mandataire: Cabinet Nuss
(86) Numéro de dépôt international: PCT/EP2019/058814
(87) Numéro de publication internationale: WO 2019/197340

(56) Documents cités:
- EP-A1- 2 908 377
- DE-A1-102012 012 663
- DE-A1-102013 011 895

## Description

La présente invention concerne le domaine des sources d'énergie électriques autonomes, en particulier celles embarquées dans des véhicules automobiles, et a pour objet une unité de batterie avec des moyens de contrôle ou de régulation de température intégrés et un véhicule automobile hybride ou électrique comportant au moins une telle unité.

Les véhicules hybrides/électriques sont équipés d'une batterie permettant de stocker l'énergie électrique nécessaire à leur fonctionnement. Les enjeux actuels nécessitent d'optimiser la conception des unités de batterie aussi dénommées « packs batteries », afin d'en tirer les meilleures performances en terme de durée de vie (charge/décharge) et d'autonomie de roulage. Le temps de charge est également un facteur important dans l'utilisation quotidienne de ces packs batteries.

Les batteries mises en œuvre ont idéalement besoin de fonctionner à des températures entre 10° C et 30° C, en particulier les batteries à haute densité de stockage, du type par exemple Li-ion ou Li-polymère. Une température trop basse impacte l'autonomie et une température trop élevée impacte la durée de vie des batteries. Il est donc nécessaire de réguler au mieux la température des batteries.

Dans le cadre des applications embarquées sur véhicules, il existe des solutions de batteries refroidies par air mais l'échange thermique reste assez limité. La tendance actuelle est d'utiliser un fluide caloporteur afin d'améliorer les échanges thermiques et d'augmenter l'efficacité de la régulation.

De plus, les logements de réception de ces batteries peuvent être réalisés directement par une partie du véhicule ou consister en des cavités formées dans une pièce structurelle de ce véhicule. Toutefois, ces solutions sont très peu flexibles en termes d'implantation et rendent difficiles la maintenance. Les solutions de packs batteries autonomes et non intégrées dans la structure du véhicule sont de ce fait à privilégier.

De nombreuses conceptions existent dans l'état de la technique : elles utilisent des solutions métalliques (acier, aluminium, etc.) avec une distribution de fluide caloporteur par durites jusqu'à des plaques de refroidissement assemblées et disposées à l'intérieur du pack batterie, sur lesquelles reposent les modules regroupant les cellules ou éléments de la batterie. DE 102013011895 A1, EP 2908377 A1 et DE 102012012663 A1 décrivent une unité de batterie pour une pluralité de cellules qui sont logées dans un boîtier comprenant un fond sur lequel reposent lesdites cellules en contact thermique avec une première plaque à haute conductivité thermique délimitant un circuit de refroidissement.

Il en résulte une construction complexe, formée par l'assemblage d'un nombre important de pièces, nécessitant la réalisation de nombreux raccordements étanches lors de la fabrication (dont la tenue au vieillissement peut être problématique) et constituant une structure encombrante, multicomposante.

De plus, le boîtier de l'unité de batterie de ces solutions connues étant réalisé en métal (préférentiellement de l'aluminium), il ne peut isoler thermiquement et électriquement le pack batterie vers l'extérieur, présente de plus un prix de revient élevé et est en outre sujet à la corrosion.

En outre, aucune mesure efficace n'est prévue dans ces solutions connues pour préserver la batterie en cas de fuite de liquide caloporteur à l'intérieur du boîtier.

La présente invention a pour but de surmonter au moins les principales limitations précitées.

A cet effet, l'invention a pour objet une unité de batterie, notamment pour véhicule automobile hybride et/ou électrique, comprenant essentiellement, d'une part, une pluralité de cellules ou d'éléments de batterie, le cas échéant regroupé(e)s physiquement et/ou électriquement en plusieurs blocs ou modules, d'autre part, un boîtier logeant et entourant lesdit(e)s cellules ou éléments et, enfin, des moyens de régulation de la température desdit(e)s cellules ou éléments par circulation de fluide caloporteur,
unité de batterie caractérisée
en ce que le boîtier comporte, au moins au niveau d'une région de fond sur laquelle reposent les cellules, au moins une, préférentiellement plusieurs, zone(s) d'échange thermique entre lesdites cellules et le fluide caloporteur, ladite ou lesdites zone(s) étant intégrée(s) dans la structure dudit boîtier, préférentiellement dans la paroi de ce dernier,
en ce que la ou chaque zone d'échange comprend un élément surfacique à conductivité thermique élevée en contact avec des cellules, d'une part, et le fluide caloporteur, d'autre part, et,
en ce que l'élément surfacique à conductivité thermique élevée est un élément rapporté dans le boîtier, et consiste en une plaquette métallique, ou en un matériau rigide et bon conducteur thermique analogue, solidarisée de manière étanche aux liquides avec un élément surfacique à faible conductivité thermique, chaque élément surfacique à faible conductivité thermique de la ou de chaque zone d'échange faisant partie intégrante du boîtier et constituant avantageusement une portion de la paroi de ce dernier.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1A et 1B sont des vues en perspective selon deux angles différents d'une unité de batterie selon l'invention, avec un boîtier parallélépipédique rectangle formé par l'assemblage d'un bac inférieur et d'un couvercle ;
la figure 2 est une vue en perspective similaire à celle de la figure 1A, le couvercle étant enlevé ;
la figure 3 est une vue totale en coupe de l'unité de batterie représentée figures 1 et 2 ;
la figure 4 est une représentation d'une partie de la représentation de la figure 3 à une échelle différente ;
la figure 5 est une représentation d'une partie de la représentation de la figure 4 à une échelle différente, en présence d'une fuite de liquide caloporteur avec évacuation vers l'extérieur ;
la figure 6 est une vue schématique en coupe d'une unité de batterie selon un autre mode de réalisation de l'unité de batterie de l'invention ;
la figure 7A est une vue similaire à celle de la figure 2, les cellules ou éléments de batterie étant enlevés et seul le bac inférieur étant représenté ;
la figure 7B est une vue similaire à celle de la figure 7A illustrant une autre variante de réalisation du bac, les cellules étant enlevées et un cadre de renfort étant rapporté sur le bac ;
la figure 8 est une vue en perspective de dessous du bac inférieur d'une unité de batterie représentée figures 1A et 1B ;
la figure 9 est une vue de détail et à une échelle différente d'une partie du bac inférieur représenté sur la figure 8, correspondant sensiblement à une portion de paroi de fond en creux formant élément surfacique à faible conductivité thermique ;
la figure 10 est une vue à une échelle différente d'un détail de la figure 9 ;
la figure 11 est une vue similaire à celle de la figure 8 après enlèvement d'une plaquette thermiquement conductrice ou à conductivité thermique élevée d'une zone d'échange thermique intégrée au bac inférieur ;
la figure 12A est une vue d'un détail (portion de la paroi de fond avec renfoncement de la zone d'échange thermique dont la plaquette conductrice a été enlevée) de la figure 11, à une échelle différente ;
la figure 12B est une vue de dessus de l'objet représenté figure 12A ;
la figure 13 est une vue en perspective de dessous d'une plaquette à conductivité thermique élevée d'une zone d'échange thermique ;
les figures 14 à 16 sont des vues respectivement identiques aux figures 1A, 1B et 1C illustrant la circulation du fluide caloporteur dans les conduits d'alimentation et d'évacuation (figures 14 et 15), dans les lignes de piquage (figure 15) et dans le volume interne d'une zone d'échange thermique formant portion de circuit élémentaire en U (figure 16) ;
la figure 17 est une vue partielle en coupe transversale (perpendiculairement à la paroi de subdivision) de l'unité de batterie représentée figures 1A et 1B, illustrant la circulation du fluide caloporteur dans les conduits d'alimentation/évacuation, les lignes de piquage et les zones d'échange thermique, et
la figure 18 est une vue similaire à la figure 1A montrant également un cadre de renfort destiné à venir s'emboîter autour et dans le bac inférieur du boîtier de l'unité de batterie.

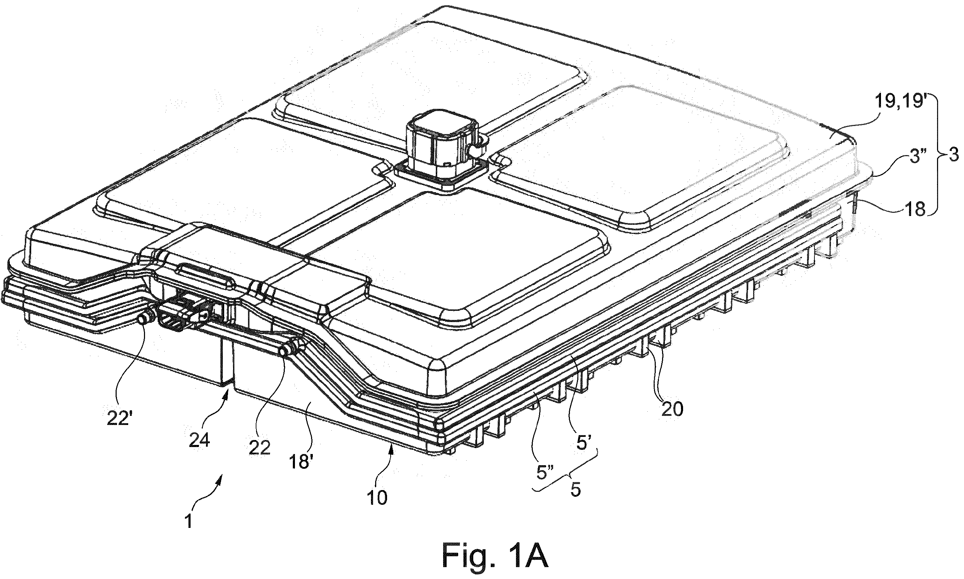

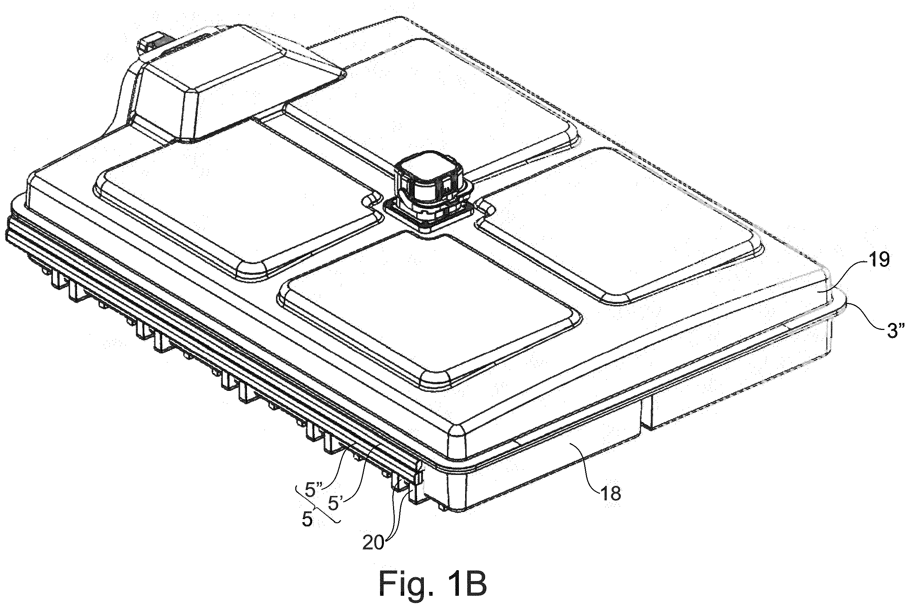

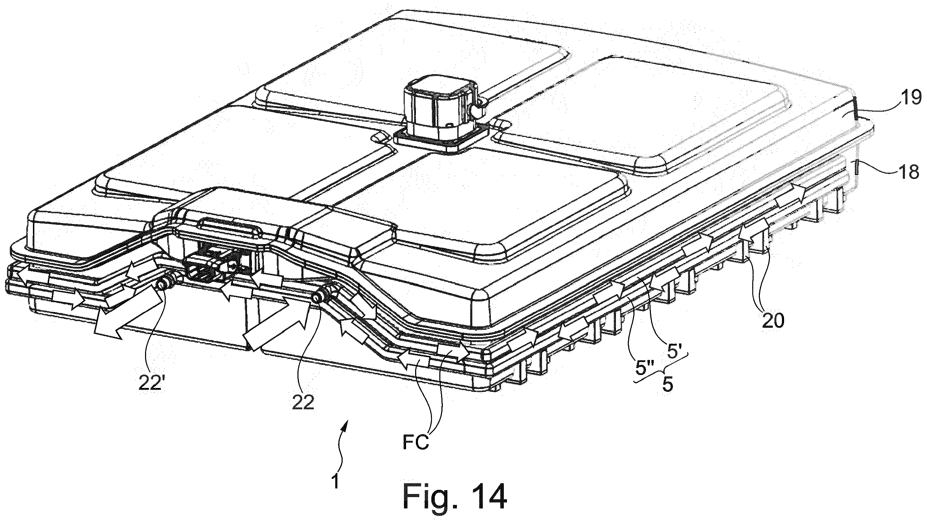

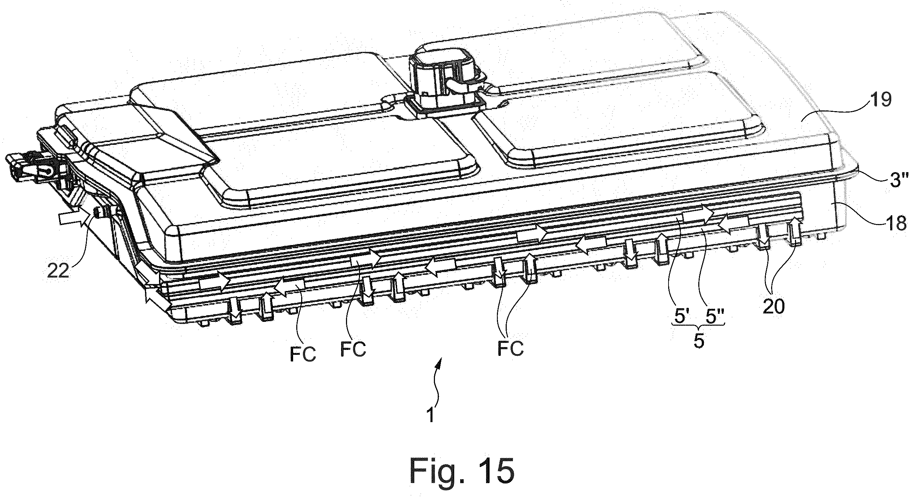

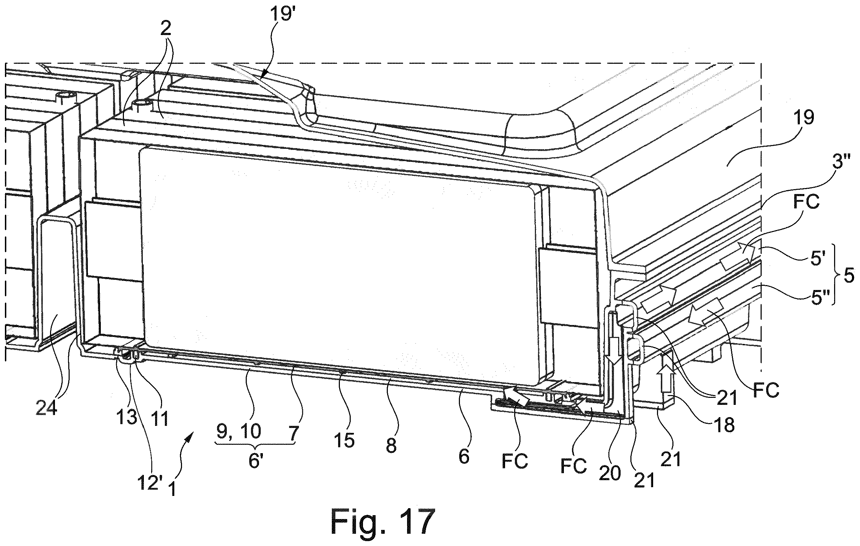

Les figures 1, 3, 7, 14, 15, 17 et 18 en particulier montrent une unité de batterie 1, notamment pour véhicule automobile hybride et/ou électrique, comprenant essentiellement, d'une part, une pluralité de cellules 2 ou d'éléments de batterie, le cas échéant regroupé(e)s physiquement et/ou électriquement en plusieurs blocs ou modules 2', d'autre part, un boîtier 3 logeant et entourant lesdit(e)s cellules ou éléments 2 et, enfin, des moyens 4, 5 de régulation de la température desdit(e)s cellules ou éléments 2 par circulation de fluide caloporteur FC.

Conformément à l'invention, le boîtier 3 comporte, au moins au niveau d'une région de fond 6 sur laquelle reposent les cellules 2, au moins une, préférentiellement plusieurs, zone(s) 6' d'échange thermique entre lesdites cellules 2 et le fluide caloporteur FC, ladite ou lesdites zone(s) 6' étant intégrée(s) dans la structure dudit boîtier 3, préférentiellement dans la paroi 3' de ce dernier.

Egalement conformément à l'invention, la ou chaque zone d'échange 6' comprend un élément surfacique 7 à conductivité thermique élevée en contact avec des cellules 2, d'une part, et le fluide caloporteur FC, d'autre part.

En outre, l'élément surfacique 7 à conductivité thermique élevée est un élément rapporté dans le boîtier 3, et consiste en une plaquette métallique, ou en un matériau rigide et bon conducteur thermique analogue, solidarisée de manière étanche aux liquides avec un élément surfacique 9 à faible conductivité thermique, chaque élément surfacique 9 à faible conductivité thermique de la ou de chaque zone d'échange 6' faisant partie intégrante du boîtier 3 et constituant avantageusement une portion de la paroi 3', 10, 11' de ce dernier.

Ainsi, du fait de l'intégration d'une partie au moins des moyens 4, 5 de régulation en température (ici au moins les zones d'échange thermique 6') dans la structure même du boîtier 3, on aboutit à une construction compacte (volume intérieur maximum, volume extérieur minimal), avec un nombre limité de pièces et de parties à assembler (seules les parties constitutives 10, 11 du boîtier 3 doivent être mutuellement solidarisées, la ou les zones 6' d'échange thermique étant incorporée(s) dans lesdites parties de boîtier 3).

Préférentiellement, un élément surfacique 7 est associé aux cellules 2 d'un unique module 2' (coïncidence et correspondance des agencements modulaires des zones 6' et des modules 2').

Les zones 6' d'échange thermique peuvent ainsi constituer des moyens de régulation de la température des cellules 2 qui non seulement sont incorporés dans la structure même du boîtier 3, mais peuvent également être organisés et segmentés en fonction de l'organisation et de l'éventuel regroupement des cellules 2 (en modules 2'), pour une efficacité de transfert thermique optimisé.

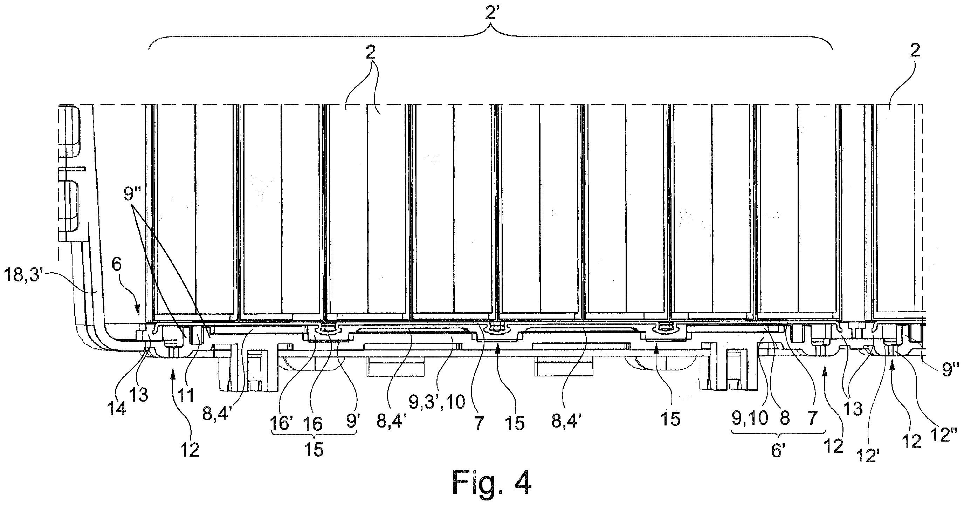

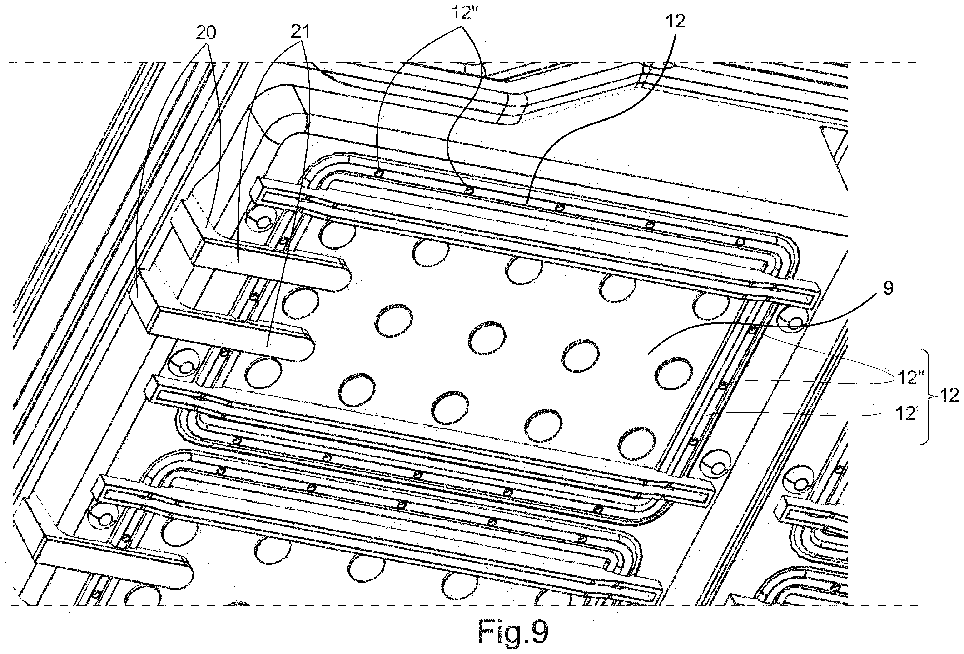

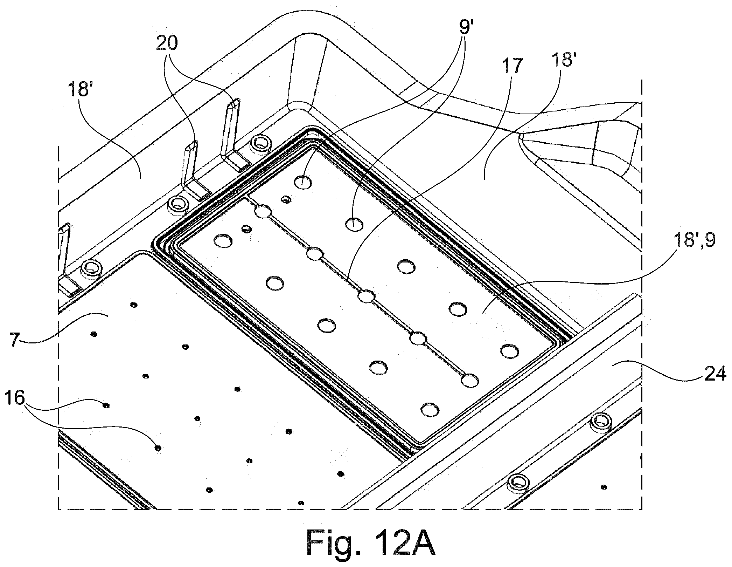

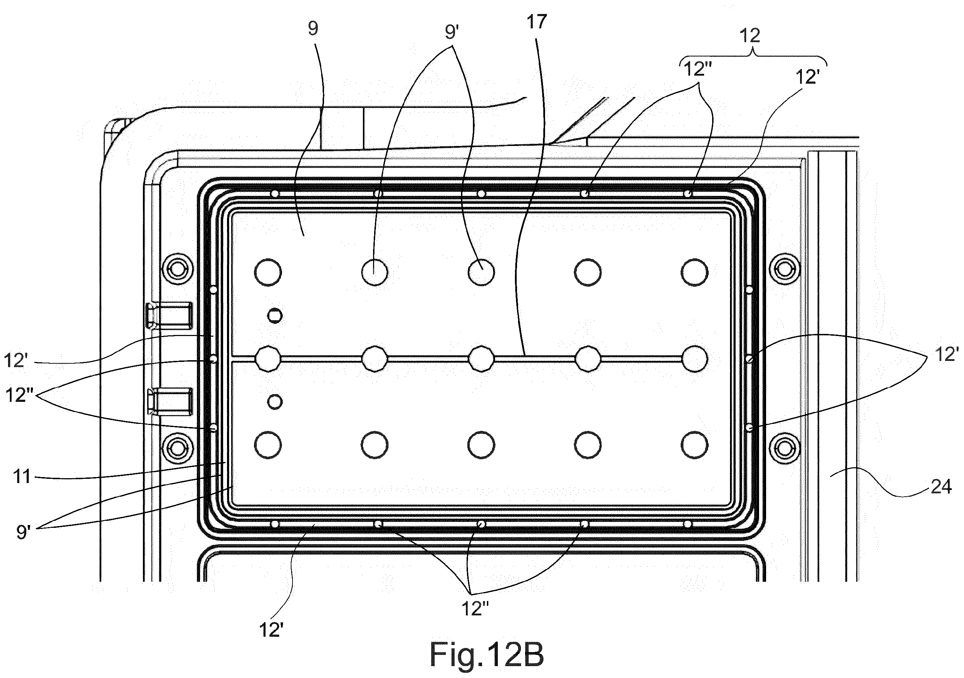

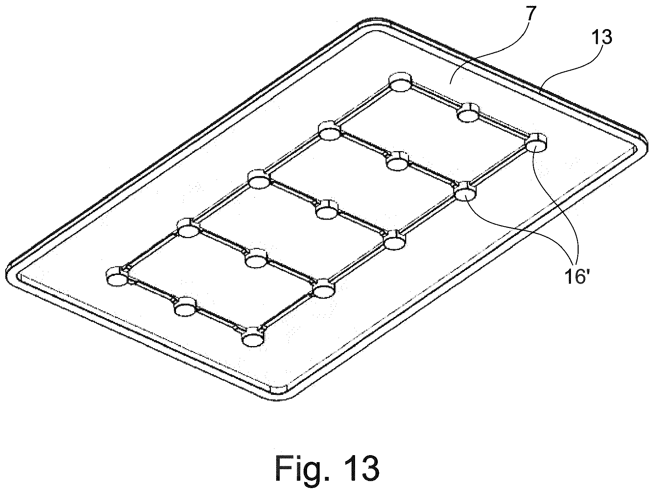

En accord avec une caractéristique constructive avantageuse de l'invention, ressortant notamment des figures 4 à 13 et 17, la ou chaque zone d'échange 6' comprend un volume 8 de circulation de fluide caloporteur FC, défini entre un élément surfacique 7 à conductivité thermique élevée, en contact direct avec des cellules 2, et un élément surfacique 9 à faible conductivité thermique, en contact avec le milieu extérieur.

Ainsi, l'échange thermique avec le fluide FC du volume 8 est extrêmement favorisé au niveau de l'élément surfacique 7 et au contraire réduit au maximum au niveau de l'élément surfacique 9 complémentaire.

Une conductivité thermique élevée, et plus généralement un bon transfert thermique entre le fluide FC et les cellules 2, est atteinte en utilisant un matériau intrinsèquement bon conducteur thermique (plaquette métallique) et utilisé en faible épaisseur, en relation avec une surface de contact maximale et une qualité de contact optimisée entre l'élément surfacique 7 et les cellules 2, le cas échéant du module 2' concerné.

La faible conductivité thermique quant à elle peut être atteinte en utilisant un matériau faiblement conducteur thermique, voire isolant thermiquement, en combinaison avec une épaisseur relativement importante de la paroi de l'élément surfacique 9.

Typiquement, on entend dans la présente par conductivité thermique À élevée, des valeurs de λ telles que λ > 50 W.m⁻¹.K⁻¹, préférentiellement λ > 100 W.m⁻¹.K⁻¹ et par faible conductivité thermique À, des valeurs des λ telles que λ < 1 W.m⁻¹.K⁻¹, préférentiellement λ < 0,5 W.m⁻¹.K⁻¹.

Avantageusement, le matériau à bonne conductivité thermique a une conductivité entre 100W/m/K et 300 W/m/K, typiquement 200W/m/K comme l'aluminium. De manière équivalente, le matériau à conductivité thermique faible a une conductivité entre 0,05 W/m/K et 0,5 W/m/K, typiquement 0,2 W/m/K comme le plastique de type PP GF30.

Dans le cadre de la présente invention, plus la différence de conductivité thermique entre l'élément 7 (à conductivité thermique élevée - par exemple plaque en matériau métallique de faible épaisseur) et l'élément 9 (à conductivité thermique faible - par exemple paroi en matériau plastique de forte épaisseur) sera importante, plus l'effet bénéfique de l'invention sera important.

Comme évoqué ci-dessus, le matériau de l'élément surfacique 7, préférentiellement de l'aluminium, peut également être non métallique, et par exemple consister en un matériau thermoplastique ou thermodur, chargé en additif pour augmenter sa conductivité thermique.

L'élément surfacique 7 peut, en variante, également être de nature souple ou flexible pour s'adapter et rattraper les défauts de planéité des modules 2', tout en étant bon conducteur thermique (élément 7 en silicone par exemple, préférentiellement chargé).

La ou chaque plaquette 7 thermiquement conductrice, outre un échange de chaleur optimisé avec les cellules 2 (éventuellement seulement du module 2' qui lui est affecté), devra délimiter de manière étanche un volume élémentaire 8 de circulation de fluide FC en relation avec un élément surfacique 9, et résister aux déformations induites par les variations de température, afin de conserver en permanence un contact surfacique optimal avec les cellules 2. Sa solidarisation et son assemblage avec le boîtier 3 et avec l'élément surfacique 9 appairé sont donc avantageusement à la fois périphériques et, au moins ponctuellement, répartis sur sa surface.

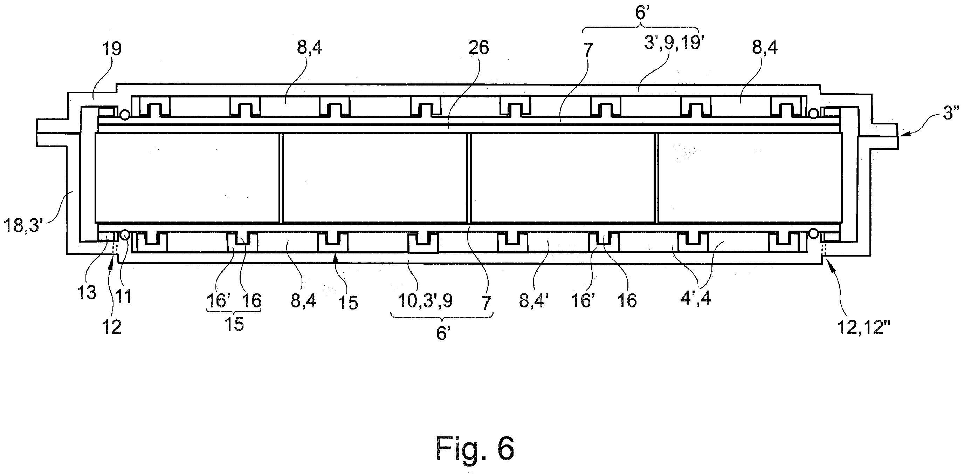

Le boîtier 3 peut ne comporter qu'une seule zone 6' d'échange thermique (uniquement dans le bac inférieur 18) ou une unique zone 6' d'échange thermique dans chacune de ses parties constitutives (par exemple une zone 6' dans le bac inférieur 18 et une zone 6' dans le couvercle 19 - figure 6).

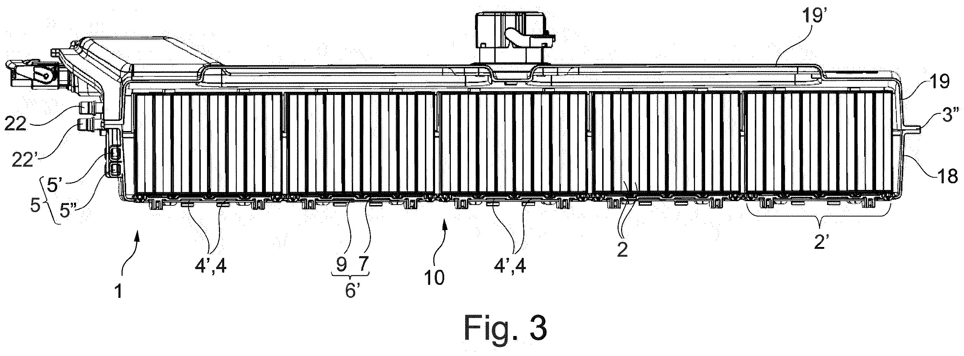

Toutefois, de manière préférée, le boîtier 3 comporte une pluralité de zones 6' d'échange thermique dans une, plusieurs ou chacune de ses parties constitutives (bac 18, couvercle 19), chaque zone 6' étant avantageusement affectée à un module 2' (cf. figures 3, 4, 8, 9, 11 et 16).

Ainsi, les éléments surfaciques 7 et 9 constituent, par coopération, des régions de paroi 3' à structure en double paroi du boîtier 3, ces régions de paroi à double peau correspondant aux zones 6' d'échange thermique et renfermant les volumes 8 de circulation de fluide caloporteur FC intégrés.

Conformément à une caractéristique importante de l'invention, ressortant des figures 4 à 6, 9, 10, 12 et 13, le ou chaque volume 8 de circulation est délimité latéralement ou périphériquement par un moyen d'étanchéité 11 disposé entre les deux éléments 7 et 9 considérés, un chemin de fuite 12 étant ménagé autour de l'élément surfacique 9 concerné, permettant l'évacuation vers l'extérieur de tout liquide caloporteur FC s'échappant le cas échéant du volume 8 visé.

Une telle réalisation permet, de manière simple, de former des volumes de circulation 8 étanches tout en garantissant, en cas d'endommagement ou de rupture accidentelle ou due au vieillissement, toute absence de contact entre le liquide caloporteur FC et les cellules 2. Les différents chemins de fuite 12 associés aux différentes zones 6' peuvent éventuellement être reliés fluidiquement entre eux pour réaliser un écoulement de fluide caloporteur s'échappant d'un volume 8 ou de plusieurs volumes 8 vers un ou plusieurs orifices d'évacuation situés en des emplacements particuliers de la paroi de fond 10 (points bas).

Il peut aussi être prévu de disposer des capteurs ou détecteurs de fuite au niveau des différents chemins de fuite 12 ou, alternativement, un seul détecteur de fuite en cas de convergence des différents chemins de fuite 12 (non représenté).

Ainsi, l'invention peut prévoir qu'au moins certains ou tous les chemins de fuite 12 des différentes zones d'échange thermique 6' convergent vers une zone ou un point unique de la paroi de fond 10 du boîtier 3, pourvu(e) d'un orifice d'évacuation 12", et, qu'éventuellement, la zone ou le point de convergence des écoulements provenant de plusieurs ou de tous les chemins de fuite 12 est équipé d'un détecteur de présence de liquide caloporteur FC.

Toutefois, de manière avantageuse, chaque chemin de fuite 12 associé à une zone 6' d'échange thermique est indépendant des autres chemins de fuite et comporte ses propres moyens d'évacuation vers l'extérieur (orifices traversants 12").

Avantageusement, en relation avec une réalisation constructive simple et économique, le ou chaque chemin de fuite 12 est formé dans la paroi de fond 10 du boîtier 3 et s'étend continûment autour du moyen d'étanchéité périphérique 11 du volume de circulation 8 concerné, lequel correspond préférentiellement à une chambre plate et plane. Ainsi, quel que soit l'endroit d'une éventuelle fuite, le liquide caloporteur sera récupéré par ledit chemin 12 et acheminé vers l'extérieur (sous-face du bac inférieur 18).

En accord avec un mode de réalisation pratique préféré, le ou chaque chemin de fuite 12 comprend une rainure ou gorge 12' formée dans la paroi de fond 10 et qui s'étend extérieurement et circonférentiellement autour du moyen d'étanchéité 11 périphérique du volume de circulation 8 considéré, en épousant avantageusement le contour dudit moyen 11. Au moins un, avantageusement deux et préférentiellement plusieurs, orifice(s) 12" traversant la paroi de fond 10 du boîtier est(sont) ménagé(s) dans le fond de ladite rainure 12'. Que l'unité 1 soit ou non inclinée par rapport à l'horizontale, une évacuation rapide vers l'extérieur du liquide FC ayant fui le volume 8 concerné est par conséquent assurée. En prévoyant avantageusement au moins deux orifices 12", une fonction d'éventation peut être assurée.

Selon une caractéristique constructive avantageuse, ressortant par exemple des figures 4 à 6 et 13, chaque élément surfacique 7 à conductivité thermique élevée et en forme de plaquette, comporte un bord formant cadre périphérique 13, d'un seul tenant ou rapporté par surmoulage, solidarisé avec la paroi de fond 10 du boîtier 3, la portion de paroi de fond 10 en regard de l'élément surfacique 7 constituant un élément surfacique 9 à faible conductivité thermique et la zone de solidarisation 14 entre le cadre 13 et la paroi de fond 10, par exemple une zone de liaison par soudure, s'étendant autour et à distance du moyen d'étanchéité périphérique 11 du volume de circulation 8 concerné.

Et préférentiellement le chemin de fuite 12 de chaque zone d'échange (6') s'étend entre la zone de solidarisation 14 et le moyen d'étanchéité périphérique 11.

L'élément surfacique 7 de chaque zone d'échange 6' se prolonge ainsi périphériquement au-delà du moyen d'étanchéité continu 11 et présente un bord 13 conformé et/ou surmoulé (par exemple plié et pourvu d'un bourrelet de matière surmoulée constituant une deuxième barrière étanche et délimitant, avec la partie débordante de l'élément 7, la rainure 12' et les bords 9" de l'élément surfacique 9, un chemin de fuite 12 vers l'extérieur (ce dernier se présente alors sous la forme d'un conduit avec des orifices 12" débouchant sur l'extérieur). Les orifices 12" peuvent typiquement présenter des diamètres compris entre 3 et 6 mm, préférentiellement de l'ordre de 4 à 5 mm.

Un tel cadre 13 permet notamment d'établir une liaison continue sur le pourtour, par soudure laser préférentiellement.

A titre d'exemple, le moyen d'étanchéité 11 peut consister en un joint d'étanchéité 14 présent, à l'état comprimé, entre les bords périphériques mutuellement solidarisés des deux éléments surfaciques 7 et 9, ce joint 14 étant préférentiellement logé dans une rainure 11' de la paroi de fond 10.

En relation notamment avec une réalisation du bac inférieur 18 par moulage par injection, il peut être prévu que chaque élément surfacique 9 corresponde à une zone renfoncée ou une dépression de la paroi de fond 10 du boîtier 3, délimitée latéralement par des bords relevés 9" sur lesquels repose sensiblement un élément surfacique 7 en forme de plaquette thermiquement conductrice, avec interposition et/ou compression d'un moyen d'étanchéité 11.

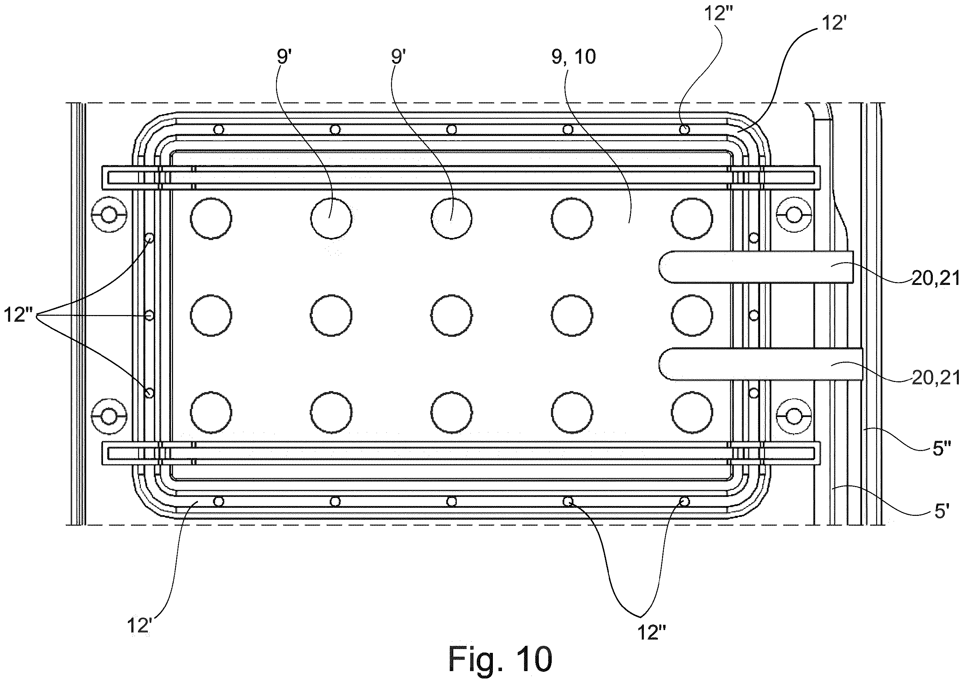

Avantageusement, et comme le montrent par exemple les figures 10 à 12, 16 à 17, les volumes de circulation 8 de la ou des différentes zone(s) d'échange thermique 6' forment des portions d'un ou de plusieurs circuit(s) 4 de circulation de fluide caloporteur FC, intégré(s) dans la structure du boîtier 3, lesdites portions de circuit 4 étant reliées fluidiquement en série, ou non, et raccordées à des conduits 5', 5" de distribution/collecte faisant partie d'un circuit 5 d'alimentation/évacuation de fluide liquide caloporteur FC, ces circuits 4 et 5 constituant les moyens de régulation de la température des cellules 2.

En accord avec une variante constructive préférée de l'invention, ressortant notamment des figures 1, 3, 7, 14, 15 et 17, le boîtier 3 est réalisé en plastique, et il est constitué, d'une part, par un bac inférieur 18, avec une paroi de fond 10 (et des parois latérales 18"), et par un couvercle supérieur 19, ce bac 18 et ce couvercle 19 étant assemblés périphériquement, préférentiellement par vissage, et éventuellement avec interposition d'un joint d'étanchéité, au niveau d'une bande de contact 3".

Une réalisation du boîtier 3 en un matériau plastique rigide (matière thermoplastique chargée ou non en additifs et/ou en fibres, par exemple polypropylène, polyamide, polyester, etc.) et en deux parties 18 et 19 assemblées périphériquement, permet d'aboutir simultanément (par rapport à des boîtiers métalliques) à une meilleure isolation thermique et à une réduction des coûts de revient, et autorise une grande variété et diversité de formes réalisables.

La zone d'assemblage étanche du bac 18 avec le couvercle 19 (le cas échéant chacun d'un seul tenant ou monobloc) peut consister en une bande continue périphérique de contact 3" obtenue par appui sous pression des bords respectifs du bac et du couvercle, ou éventuellement par fusion de matière entre les bords en regard et à configurations complémentaires des deux parties 18 et 19 constitutives du boîtier 3.

Un assemblage amovible par vissage, clippage ou analogue sera préféré car il permet un démontage du couvercle 19 pour des opérations de test, de maintenance et de remplacement de cellule(s) 2, ou de module(s) 2'.

En outre, un joint de compression est, de manière connue, intercalé entre les deux bords en contact au niveau de la zone d'assemblage 3".

Comme indiqué précédemment, il est prévu que le bac inférieur 18 présente des formations ou renfoncements dans sa paroi de fond 10, et éventuellement dans certaines au moins de ses parois latérales 18', ces formations ou renfoncements constituant chacun un élément surfacique 9 à faible conductivité thermique et formant, en coopération chacun avec un élément surfacique 7 à conductivité thermique élevée, en forme de plaquette et en contact avec des cellules 2, par exemple toutes les cellules 2 d'un module 2', des zones 6' d'échange thermique avec chacune un volume 8 de circulation de fluide caloporteur FC.

Ce bac 18 peut aussi, en variante et comme le montre la figure 6, ne présenter qu'une seule plaque 7 et une seule zone 6' au niveau de sa région de fond 6.

Afin d'augmenter les possibilités de régulation des cellules, en augmentant les interfaces d'échange thermique et le pouvoir chauffant/réfrigérant disponible, il peut être prévu que le couvercle 19 également intègre, dans sa structure, une ou des zones 6' d'échange thermique entre au moins certaines des, préférentiellement toutes les, cellules 2 et le fluide caloporteur FC. La ou chaque zone d'échange thermique 6' du couvercle 19 peut comprendre un volume 8 de circulation de fluide caloporteur FC et être constituée par la coopération d'un(e) formation ou renfoncement de la paroi 19' du couvercle 19, constituant un élément surfacique 9 à faible conductivité thermique, avec un élément surfacique 7 à conductivité thermique élevée, en forme de plaquette et en contact avec des cellules 2, par exemple toutes les cellules 2 d'un module 2' (figures 3 et 6). La construction en double paroi du couvercle 19 peut ainsi être similaire à celle du bac 18.

Afin de pouvoir compenser les probables jeux d'assemblage des différentes parties 18, 19 du boîtier 3 pour ne pas obérer les performances de transfert thermique entre les cellules 2 et le fluide caloporteur FC, en particulier au niveau du couvercle 19, une plaque ou feuille 26 flexible et thermiquement conductrice est intercalée entre l'élément ou les éléments surfacique(s) 7 à conductivité thermique élevée de la ou des zone(s) 6' d'échange thermique intégrées dans le couvercle 19, dans le fond 6' du bac 6 et/ou dans les parois latérales 18' du bac 18, d'une part, et les faces concernées des cellules 2 des modules 2' en regard, d'autre part.

Le cas échéant, en variante, chaque élément surfacique 7 en forme de plaquette peut être revêtu d'une couche individuelle de matériau à conductivité thermique élevée, tel que par exemple du silicone chargé.

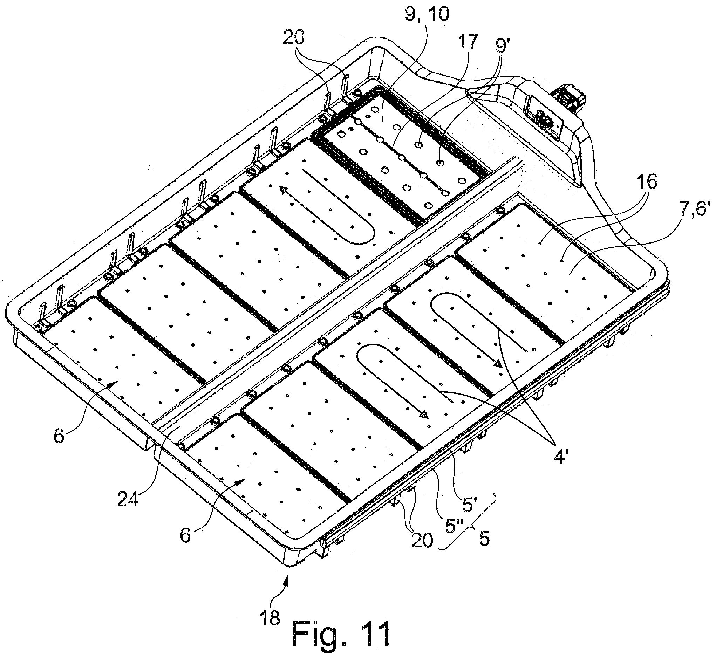

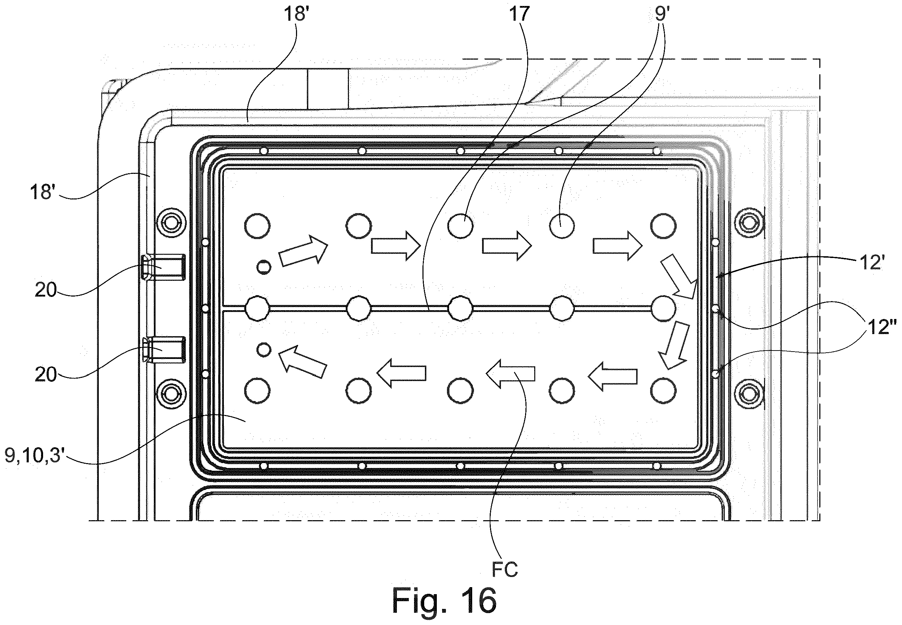

Comme le montrent les figures 11 et 16, chaque zone d'échange thermique 6' comprend un volume 8 de circulation de fluide caloporteur FC formant une portion de circuit en forme de U ou en serpentin, dont les deux extrémités libres des deux branches sont reliées fluidiquement à des lignes 5, 5" de distribution/collecte faisant partie d'un circuit 5 d'alimentation/évacuation de fluide caloporteur FC.

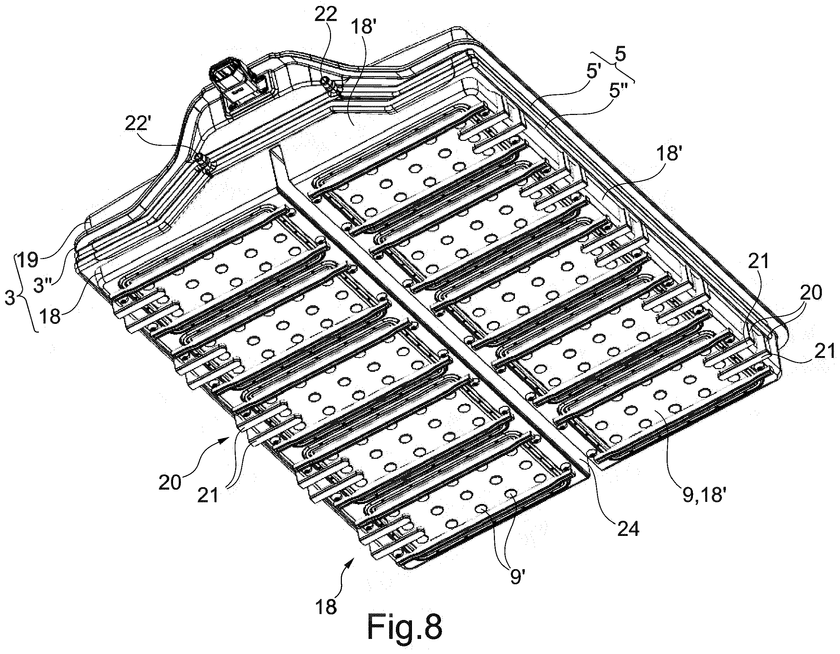

Les volumes 8 de circulation en U ou en serpentin (non représenté) sont tous reliés fluidiquement :
- soit individuellement en série et collectivement au circuit 5 (non représenté) ;
- soit individuellement et parallèlement à ce circuit 5 (figures 8 à 11 et 17).

De manière préférée, et comme cela est illustré de manière exemplaire sur les figures 4 à 6, 11 à 13, chaque élément surfacique 7 à conductivité thermique élevée en forme de plaquette est solidarisé avec la paroi 3' du boîtier 3, d'une part, périphériquement, préférentiellement continûment et par exemple par accrochage mécanique ou soudure, et, d'autre part, au niveau d'au moins une zone 15 de liaisonnement située à l'intérieur de la surface de ladite plaquette 7, avantageusement au niveau d'une pluralité de zones de liaisonnement 15 réparties sur la surface de ladite plaquette 7, préférentiellement régulièrement.

Ainsi, en plus d'une fixation périphérique, la ou chaque plaquette 7 est également solidarisée rigidement en une pluralité de points ou de zones 15 dispersé(e)s. Il en résulte une fixation répartie qui évite toute déformation de la ou des plaquette(s) 7 sous l'effet de la chaleur, et également sous l'effet du poids des cellules 2 (pour les plaquettes 7 du bac 18 - les zones 15 formant également des points d'appui - répartition de la contrainte), permettant d'assurer dans le temps un contact surfacique optimal entre plaquette(s) 7 et cellules 2.

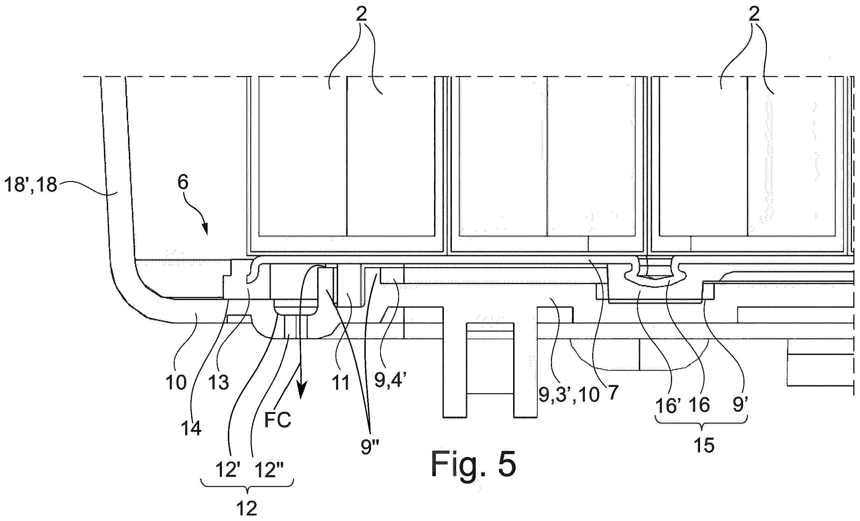

En accord avec un mode de réalisation pratique avantageux ressortant des figures 4 et 5 en particulier, chaque élément surfacique 7 à conductivité thermique élevée et en forme de plaquette, est solidarisé avec une portion de la paroi 3' du boîtier 3 constituant un élément surfacique 9 à faible conductivité thermique, ce au niveau d'au moins une zone de liaisonnement 15, préférentiellement d'une pluralité de zones de liaisonnement 15 réparties régulièrement. Chaque zone de liaisonnement 15 consiste en une déformation locale 16, protubérante en direction de la portion de paroi 3', de l'élément surfacique 7 sous forme de plaquette métallique, ladite déformation 16 étant surmoulée par un matériau 16' compatible avec le matériau de ladite portion de paroi 3' pour une liaison par soudure laser, par exemple.

Ces points de liaison 15 sous forme de formations locales proéminentes en matière plastique 16' présentant un noyau métallique 16 peuvent par exemple venir en engagement avec appui dans des formations locales renfoncées 9' formées dans la portion de paroi 3' constituant l'élément surfacique 9, pour réaliser autant de liaisons mécaniques ponctuelles.

Malgré la présence de bandes de matière éventuelles entre points 16' (découlant du processus de surmoulage), un chemin de circulation de fluide FC dans la zone d'échange 6' concernée est ménagé entre les deux éléments surfaciques 7 et 9, dans le volume 8 qu'ils délimitent entre eux.

Avantageusement, il peut être prévu que l'un des deux éléments surfaciques 7 et 9 en regard, définissant entre eux un volume de circulation 8 de fluide caloporteur FC d'une zone 6' d'échange thermique, avantageusement de forme rectangulaire, présente une nervure 17 subdivisant ledit volume 8 en deux branches d'une portion élémentaire de circuit de circulation 4' en U, en S ou en serpentin.

Bien que cette forme circuit élémentaire de circulation 4' soit préférée du fait de sa simplicité de réalisation, de grande surface d'échange et de trajet de circulation adapté à une circulation aisée, d'autres formes sont également possibles telles que le serpentin, le S, le Z ou analogue.

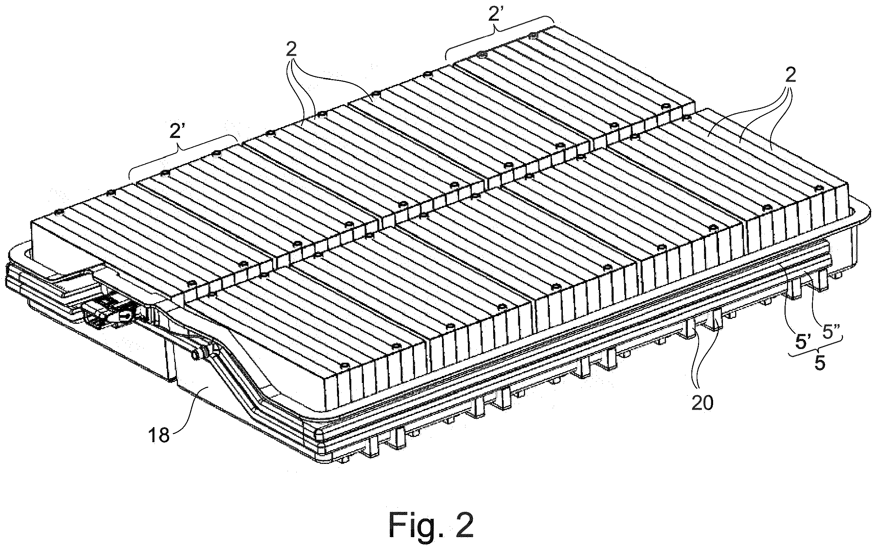

Comme cela ressort également des figures 1 à 3, 8 à 12 et 14 à 17, les moyens 4, 5 de régulation de la température comprennent des conduits de distribution 5'/collecte 5" constituant un ou plusieurs circuit(s) d'alimentation/évacuation de fluide liquide caloporteur LC, ces conduits 5', 5" étant intégrés structurellement dans le boîtier 3, de même que des lignes secondaires ou de piquage 20 reliant lesdits conduits 5', 5" aux volumes 8 de circulation des zones 6' d'échanges thermique, ces conduits 5', 5" et lignes 20 étant au moins partiellement formés d'un seul tenant avec la paroi 3' du boîtier 3.

L'intégration des conduits 5', 5" et lignes 20 peut ainsi être réalisé au moins partiellement lors de la fabrication du bac 18 et du couvercle 19 et permet de s'affranchir de la mise en place et du raccordement étanche fastidieux de conduits et durites, tout en évitant aussi l'exposition de ces moyens par rapport à l'environnement extérieur (moyens de distribution accolés contre la paroi 3').

Avantageusement, les parois tubulaires des conduits 5', 5" et des lignes 20 sont formées, d'une part, partiellement dans et/ou sur la paroi 3' du boîtier 3, préférentiellement de forme générale sensiblement parallélépipédique rectangle, et, d'autre part, partiellement par de la matière surmoulée 21 et/ou des portions de paroi rapportées et assemblées par soudage par vibrations ou laser.

La répartition et la découpe desdites parois tubulaires, entre leurs parties formées par la paroi 10', 18' du bac 18 et leurs parties rapportées par portions ou par surmoulage 21, dépendent des possibilités du moule de moulage du bac 18 et de la complexité de configuration du bac 18 lui-même, ainsi que le cas échéant du couvercle 19.

Comme le montrent les figures 1 notamment, le ou chaque circuit 5 d'alimentation/évacuation comprend un embout de raccordement 22 pour le ou les conduit(s) de distribution 5' et un embout de raccordement 22' pour le ou les conduit(s) de collecte 5", un circuit 5 commun ou des circuits 5 séparés étant avantageusement prévu(s) pour les volumes 8 de circulation des zones 6' d'échange thermique présentes dans le bac inférieur 18 et le couvercle 19 qui forment les deux parties constitutives du boîtier 3.

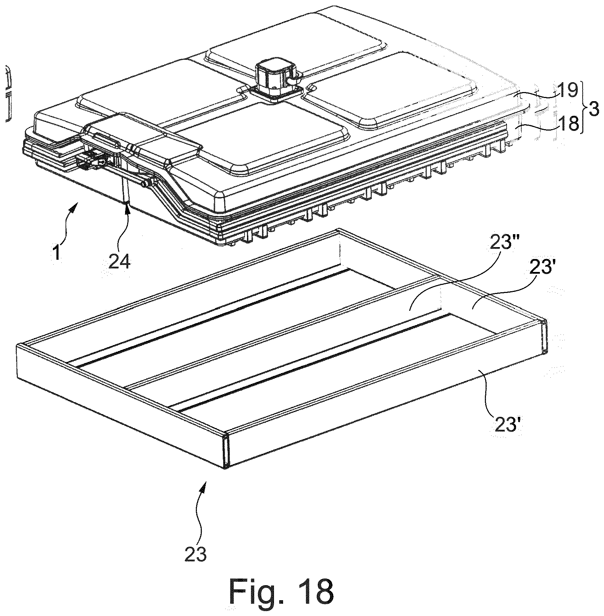

Afin de conférer au bac 18 une résistance mécanique et une rigidité améliorées, notamment compte tenu du poids important que peuvent représenter les cellules 2, il peut être prévu que le bac 18 comprenne :
- une structure de renfort intégrée dans le corps du bac 18, par exemple surmoulée par le matériau thermoplastique constituant la paroi dudit bac 18, et/ou,
- une structure de renfort 23 coopérant extérieurement, par conjugaison de formes, avec la paroi thermoplastique dudit bac 18, par exemple du type cadre fournissant notamment une rigidification médiane et périphérique audit bac 18 (figure 18). Ce cadre 23 peut comporter des parois latérales 23' et une entretoise médiane 23".

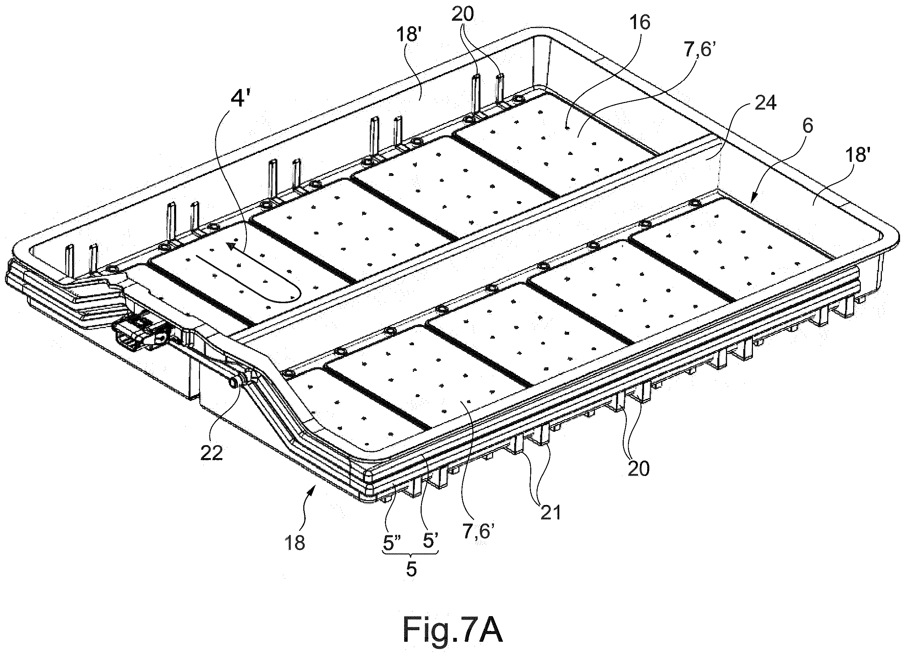

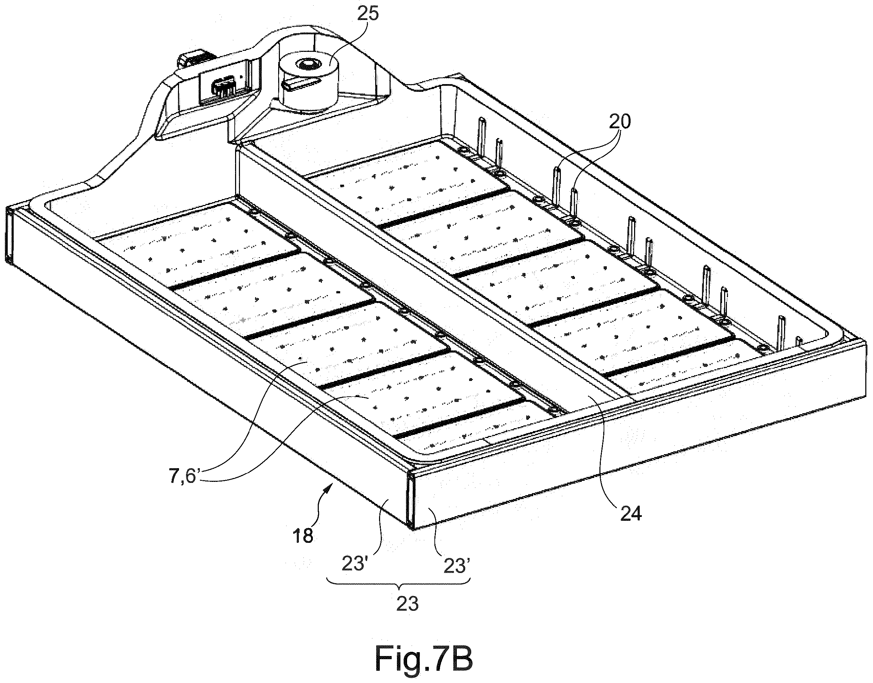

En outre, pour renforcer structurellement le fond 10 du bac 18 et éventuellement fournir une surface de paroi additionnelle pour l'aménagement de zones 6' d'échange thermique, le bac 18 peut en outre comprendre au moins une paroi intérieure de subdivision 24, s'étendant d'un seul tenant depuis le fond du bac 18, coopérant avantageusement avec une structure de renfort 23 et intégrant, le cas échéant, des volumes 8 de circulation de fluide caloporteur FC, ces volumes 8 faisant préférentiellement partie des moyens 4 de circulation du bac 18 et reliés fluidiquement aux moyens de distribution 5 (figures 7, 8, 11 et 17).

Ladite paroi de subdivision 24 peut être une paroi double subdivisant le bac 6 en deux sous-bacs et fournissant une rainure de réception pour l'entretoise 23" du cadre de renfort 23.

Par ailleurs, un moyen 25 de contrôle de la température, de la circulation et/ou de la distribution du liquide caloporteur est intégré structurellement, voire matériellement, au moins en partie dans le boîtier 3 (voir figure 7B - intégration partielle d'une pompe à eau).

Enfin, l'invention concerne également un véhicule automobile, en particulier électrique ou hybride, caractérisé en ce qu'il comprend au moins une unité de batterie 1 telle que décrite ci-dessus, cette unité de batterie 1 comportant en outre au moins un moyen de mesure de température interne, des moyens de raccordement électrique des cellules ou éléments 2 entre elles et des moyens de branchement extérieur, ces derniers étant avantageusement partiellement formés avec ou dans la paroi 3',10 du boîtier 3.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Unité de batterie (1), notamment pour véhicule automobile hybride et/ou électrique, comprenant essentiellement, d'une part, une pluralité de cellules (2) ou d'éléments de batterie, le cas échéant regroupé(e)s physiquement et/ou électriquement en plusieurs blocs ou modules (2'), d'autre part, un boîtier (3) logeant et entourant lesdit(e)s cellules ou éléments (2) et, enfin, des moyens (4, 5) de régulation de la température desdit(e)s cellules ou éléments (2) par circulation de fluide caloporteur (FC),
comportant, au moins au niveau d'une région de fond (6) sur laquelle reposent les cellules (2), au moins une, préférentiellement plusieurs, zone(s) (6') d'échange thermique entre lesdites cellules (2) et le fluide caloporteur (FC), ladite ou lesdites zone(s) (6') étant intégrée(s) dans la structure dudit boîtier (3), préférentiellement dans la paroi (3') de ce dernier,
la ou chaque zone d'échange (6') comprenant un élément surfacique (7) à conductivité thermique élevée en contact avec des cellules (2), d'une part, et le fluide caloporteur (FC), d'autre part, et,
l'élément surfacique (7) à conductivité thermique élevée étant un élément rapporté dans le boîtier (3), et consistant en une plaquette métallique, ou en un matériau rigide et bon conducteur thermique analogue, solidarisée de manière étanche aux liquides avec un élément surfacique (9) à faible conductivité thermique, chaque élément surfacique (9) à faible conductivité thermique de la ou de chaque zone d'échange (6') faisant partie intégrante du boîtier (3) et constituant avantageusement une portion de la paroi (3', 10, 11') de ce dernier,
unité de batterie (1) **caractérisée en ce que** la ou chaque zone d'échange (6') comprend un volume (8) de circulation de fluide caloporteur (FC), défini entre un élément surfacique (7) à conductivité thermique élevée, en contact direct avec des cellules (2), et un élément surfacique (9) à faible conductivité thermique, en contact avec le milieu extérieur, et consistant en une portion de la paroi de fond (10) du boîtier (3), et **en ce que** le ou chaque volume (8) de circulation est délimité latéralement ou périphériquement par un moyen d'étanchéité (11) disposé entre les deux éléments (7 et 9) considérés, un chemin de fuite (12) étant ménagé autour de l'élément surfacique (9) concerné, permettant l'évacuation vers l'extérieur de tout liquide caloporteur (FC) s'échappant le cas échéant du volume (8) visé.

2. Unité de batterie selon la revendication 1, **caractérisée en ce que** le ou chaque chemin de fuite (12) est formé dans la paroi de fond (10) du boîtier (3) et s'étend continûment autour du moyen d'étanchéité périphérique (11) du volume de circulation (8) concerné, lequel correspond préférentiellement à une chambre plate et plane.

3. Unité de batterie selon la revendication 1 ou 2, **caractérisée en ce que** le ou chaque chemin de fuite (12) comprend une rainure ou gorge (12') formée dans la paroi de fond (10) et qui s'étend extérieurement et circonférentiellement autour du moyen d'étanchéité (11) périphérique du volume de circulation (8) considéré, en épousant avantageusement le contour dudit moyen (11), et **en ce qu'**au moins un, préférentiellement plusieurs, orifice(s) (12") traversant la paroi de fond (10) du boîtier est(sont) ménagé(s) dans le fond de ladite rainure (12').

4. Unité de batterie selon l'une quelconque des revendications 1 à 3, **caractérisée en ce que** chaque élément surfacique (7) à conductivité thermique élevée et en forme de plaquette, comporte un bord formant cadre périphérique (13), d'un seul tenant ou rapporté par surmoulage, solidarisé avec la paroi de fond (10) du boîtier (3), la portion de paroi de fond (10) en regard de l'élément surfacique (7) constituant un élément surfacique (9) à faible conductivité thermique et la zone de solidarisation (14) entre le cadre (13) et la paroi de fond (10), par exemple une zone de liaison par soudure, s'étendant autour et à distance du moyen d'étanchéité périphérique (11) du volume de circulation (8) concerné.

5. Unité de batterie selon la revendication 4, **caractérisée en ce que** le chemin de fuite (12) de chaque zone d'échange (6') s'étend entre la zone de solidarisation (14) et le moyen d'étanchéité périphérique (11).

6. Unité de batterie selon l'une quelconque des revendications 1 à 5, **caractérisée en ce qu'**au moins certains ou tous les chemins de fuite (12) des différentes zones d'échange thermique (6') convergent vers une zone ou un point unique de la paroi de fond (10) du boîtier (3), pourvu(e) d'un orifice d'évacuation (12").

7. Unité de batterie selon la revendication 6, **caractérisée en ce que** la zone ou le point de convergence des écoulements provenant de plusieurs ou de tous les chemins de fuite (12) est équipé d'un détecteur de présence de liquide caloporteur (FC).

8. de batterie selon l'une quelconque des revendications 1 à 7, **caractérisée en ce que** le moyen d'étanchéité (11) consiste en un joint d'étanchéité (14) présent, à l'état comprimé, entre les bords périphériques mutuellement solidarisés des deux éléments surfaciques (7 et 9), ce joint (14) étant préférentiellement logé dans une rainure (11') de la paroi de fond (10).

9. Unité de batterie selon l'une quelconque des revendications 1 à 8, **caractérisée en ce que** chaque élément surfacique (9) correspond à une zone renfoncée ou une dépression de la paroi de fond (10) du boîtier (3), délimitée latéralement par des bords relevés (9") sur lesquels repose sensiblement un élément surfacique (7) en forme de plaquette thermiquement conductrice, avec interposition d'un moyen d'étanchéité (11).

10. Unité de batterie selon l'une quelconque des revendications 1 à 9, **caractérisée en ce que** chaque élément surfacique (7) à conductivité thermique élevée en forme de plaquette est solidarisé avec la paroi de fond (10) du boîtier (3), d'une part, périphériquement au niveau d'une zone de solidarisation (14), préférentiellement continûment et par exemple par soudure, et, d'autre part, au niveau d'au moins une zone (15) de liaisonnement située à l'intérieur de la surface de ladite plaquette (7), avantageusement au niveau d'une pluralité de zones de liaisonnement (15) réparties sur la surface de ladite plaquette (7), préférentiellement régulièrement.

11. Unité de batterie selon l'une quelconque des revendications 1 à 10, **caractérisée en ce que** chaque élément surfacique (7) à conductivité thermique élevée et en forme de plaquette, est solidarisé avec une portion de la paroi de fond (10) du boîtier (3) constituant un élément surfacique (9) à faible conductivité thermique, ce au niveau d'au moins une zone de liaisonnement (15), préférentiellement d'une pluralité de zones de liaisonnement (15) réparties régulièrement, chaque zone de liaisonnement (15) consistant en une déformation locale (16), protubérante en direction de la portion de paroi (10), de l'élément surfacique (7) sous forme de plaquette métallique, ladite déformation (16) étant surmoulée par un matériau (16') compatible avec le matériau de ladite portion de paroi de fond (10) pour une liaison par soudure laser par exemple.

12. Unité de batterie selon l'une quelconque des revendications 1 à 11, **caractérisée en ce que** l'un des deux éléments surfaciques (7 et 9) en regard, définissant entre eux un volume de circulation (8) de fluide caloporteur (FC) d'une zone (6') d'échange thermique, avantageusement de forme rectangulaire et plane, présente une nervure (17) subdivisant ledit volume (8) en deux branches d'une portion élémentaire de circuit de circulation (4') en U, en S ou en serpentin.

13. Unité de batterie selon l'une quelconque des revendications 1 à 12, **caractérisée en ce que** les volumes de circulation (8) de la ou des différentes zone(s) d'échange thermique (6') forment des portions d'un ou de plusieurs circuit(s) (4) de circulation de fluide caloporteur (FC), intégré(s) dans la structure du boîtier (3), lesdites portions de circuit (4) étant reliées fluidiquement en série, ou non, et raccordées à des conduits (5', 5") de distribution/collecte faisant partie d'un circuit (5) d'alimentation/évacuation de fluide liquide caloporteur (FC), ces circuits (4 et 5) constituant les moyens de régulation de la température des cellules (2).

14. Unité de batterie selon l'une quelconque des revendications 1 à 13, **caractérisée en ce que** le boîtier (3) est réalisé en un matériau plastique et comprend un bac inférieur (18), avec une paroi de fond (10), et un couvercle supérieur (19) assemblés périphériquement entre eux, préférentiellement par vissage, et éventuellement avec interposition d'un joint d'étanchéité, au niveau d'une bande de contact (3").

15. Unité de batterie selon la revendication 14, **caractérisée en ce que** le couvercle (19) également intègre, dans sa structure, une ou des zones (6') d'échange thermique entre au moins certaines des, préférentiellement toutes les, cellules (2) et le fluide caloporteur (FC), la ou chaque zone d'échange thermique (6') du couvercle (19) comprenant un volume (8) de circulation de fluide caloporteur (FC) et étant constituée par la coopération d'un(e) formation ou renfoncement de la paroi (19') du couvercle (19), constituant un élément surfacique (9) à faible conductivité thermique, avec un élément surfacique (7) à conductivité thermique élevée, en forme de plaquette et en contact avec des cellules (2), par exemple toutes les cellules (2) d'un module (2').

16. Unité de batterie selon la revendication 14 ou 15, **caractérisée en ce qu'**une plaque ou feuille (26) flexible et thermiquement conductrice est intercalée entre l'élément ou les éléments surfacique(s) (7) à conductivité thermique élevée de la ou des zone(s) (6') d'échange thermique intégrées dans le couvercle (19) et/ou le fond du bac (18), d'une part, et les faces concernées des cellules (2) des modules (2') en regard, d'autre part.

17. Unité de batterie selon l'une quelconque des revendications 1 à 16, **caractérisée** en ce chaque zone d'échange thermique (6') comprend un volume (8) de circulation de fluide caloporteur (FC) formant une portion de circuit en forme de U ou en serpentin, dont les deux extrémités libres des deux branches sont reliées fluidiquement à des lignes (5, 5") de distribution/collecte faisant partie d'un circuit (5) d'alimentation/évacuation de fluide caloporteur (FC).

18. Unité de batterie selon l'une quelconque des revendications 1 à 17, **caractérisée en ce que** les moyens (4, 5) de régulation de la température comprennent des conduits de distribution (5')/collecte (5") constituant un ou plusieurs circuit(s) d'alimentation/évacuation de fluide liquide caloporteur (LC), ces conduits (5', 5") étant intégrés structurellement dans le boîtier (3), de même que des lignes secondaires ou de piquage (20) reliant lesdits conduits (5', 5") aux volumes (8) de circulation des zones (6') d'échanges thermique, ces conduits (5', 5") et lignes (20) étant au moins partiellement formés d'un seul tenant avec la paroi (3') du boîtier (3).

19. Unité de batterie selon la revendication 18, **caractérisée en ce que** les parois tubulaires des conduits (5', 5") et des lignes (20) sont formées, d'une part, partiellement dans et/ou sur la paroi (3') du boîtier (3), préférentiellement de forme générale sensiblement parallélépipédique rectangle, et, d'autre part, partiellement par de la matière surmoulée (21) et/ou des portions de paroi rapportées et assemblées par soudage par vibrations ou laser.

20. Unité de batterie selon l'une quelconque des revendications 18 et 19, **caractérisée en ce que** le ou chaque circuit (5) d'alimentation/évacuation comprend un embout de raccordement (22) pour le ou les conduit(s) de distribution (5') et un embout de raccordement (22') pour le ou les conduit(s) de collecte (5"), un circuit (5) commun ou des circuits (5) séparés étant avantageusement prévu(s) pour les volumes (8) de circulation des zones (6') d'échange thermique.

21. Unité de batterie selon l'une quelconque des revendications 14 à 16, ou l'une quelconque des revendications 17 à 20 pour autant qu'elles se rattachent à la revendication 14, **caractérisée en ce que** le bac inférieur (18) comprend une structure de renfort intégrée dans le corps du bac (18), par exemple surmoulée par le matériau thermoplastique constituant la paroi dudit bac (18).

22. Unité de batterie selon l'une quelconque des revendications 14 à 16, ou l'une quelconque des revendications 17 à 20 pour autant qu'elles se rattachent à la revendication 14, **caractérisée en ce que** le bac (18) comprend une structure de renfort (23) coopérant extérieurement, par conjugaison de formes, avec la paroi thermoplastique du bac inférieur (18), par exemple du type cadre fournissant notamment une rigidification médiane et périphérique audit bac (18).

23. Unité de batterie selon l'une quelconque des revendications 14 à 16, ou l'une quelconque des revendications 17 à 20 pour autant qu'elles se rattachent à la revendication 14, **caractérisée en ce que** le bac inférieur (18) comprend au moins une paroi intérieure de subdivision (24), s'étendant d'un seul tenant depuis le fond du bac (18), coopérant avantageusement avec une structure de renfort (23) et intégrant, le cas échéant, des volumes (8) de circulation de fluide caloporteur (FC), ces volumes (8) faisant préférentiellement partie des moyens (4) de circulation du bac (18) et reliés fluidiquement aux moyens de distribution (5).

24. Unité de batterie selon l'une quelconque des revendications 1 à 23, **caractérisée en ce qu'**un moyen (25) de contrôle de la température, de la circulation et/ou de la distribution du liquide caloporteur est intégré structurellement, voire matériellement, au moins en partie dans le boîtier (3).

25. Véhicule automobile, en particulier électrique ou hybride, **caractérisé en ce qu'**il comprend au moins une unité de batterie (1) selon l'une quelconque des revendications 1 à 24, cette unité de batterie (1) comportant en outre au moins un moyen de mesure de température interne, des moyens de raccordement électrique des cellules ou éléments (2) entre elles et des moyens de branchement extérieur, ces derniers étant avantageusement partiellement formés avec ou dans la paroi (3', 10) du boîtier (3).

## Patentansprüche

1. Batterieeinheit (1), insbesondere für ein Hybrid-und/oder Elektrokraftfahrzeug, umfassend im Wesentlichen einerseits eine Mehrzahl von Batteriezellen (2) oder -elementen, die gegebenenfalls physisch und/oder elektrisch zu mehreren Blöcken oder Modulen (2') zusammengefasst sind, andererseits ein Gehäuse (3), das die Zellen oder Elemente (2) aufnimmt oder umgibt, und schließlich Mittel (4, 5) zur Regelung der Temperatur der Zellen oder Elemente (2) durch Zirkulation von Wärmeübertragungsfluid (FC),
aufweisend, wenigstens an einem Bodenbereich (6), auf dem die Zellen (2) aufliegen, mindestens eine, vorzugsweise mehrere Zone(n) (6') zum Wärmeaustausch zwischen den Zellen (2) und dem Wärmeübertragungsfluid (FC), wobei die Zone(n) (6') in die Struktur des Gehäuses (3), vorzugsweise in die Wand (3') des letzteren integriert ist bzw. sind,
wobei die oder jede Austauschzone (6') ein Flächenelement (7) mit erhöhter Wärmeleitfähigkeit in Kontakt mit Zellen (2) einerseits und dem Wärmeübertragungsfluid (FC) andererseits umfasst, und wobei das Flächenelement (7) mit erhöhter Wärmeleitfähigkeit ein Element ist, das im Gehäuse (3) eingesetzt ist und aus einem Plättchen aus Metall oder einem analogen starren und gut wärmeleitenden Material besteht, das flüssigkeitsdicht mit einem Flächenelement (9) mit geringer Wärmeleitfähigkeit fest verbunden ist, wobei jedes Flächenelement (9) mit geringer Wärmeleitfähigkeit der oder jeder Austauschzone (6') fester Bestandteil des Gehäuses (3) ist und vorteilhafterweise einen Abschnitt der Wand (3', 10, 11') des letzteren bildet,
wobei die Batterieeinheit (1) **dadurch gekennzeichnet ist, dass** die oder jede Austauschzone (6') ein Volumen (8) zur Zirkulation von Wärmeübertragungsfluid (FC) umfasst, das zwischen einem Flächenelement (7) mit erhöhter Wärmeleitfähigkeit in direktem Kontakt mit Zellen (2) und einem Flächenelement (9) mit geringer Wärmeleitfähigkeit, das mit der Außenumgebung in Kontakt steht und aus einem Abschnitt der Bodenwand (10) des Gehäuses (3) besteht, definiert ist, und dadurch, dass das oder jedes Zirkulationsvolumen (8) seitlich oder in Umfangsrichtung von einem Dichtungsmittel (11) begrenzt ist, das zwischen den zwei betreffenden Elementen (7 und 9) angeordnet ist, wobei ein Leckageweg (12) um das betroffene Flächenelement (9) ausgebildet ist, der den Ablauf jeglicher Wärmeübertragungsflüssigkeit (FC) nach außen gestattet, die gegebenenfalls aus dem entsprechenden Volumen (8) entweicht.

2. Batterieeinheit nach Anspruch 1, **dadurch gekennzeichnet, dass** der oder jeder Leckageweg (12) in der Bodenwand (10) des Gehäuses (3) ausgebildet ist und sich durchgehend um das umlaufende Dichtungsmittel (11) des betroffenen Zirkulationsvolumens (8) erstreckt, das vorzugsweise einer flachen und ebenen Kammer entspricht.

3. Batterieeinheit nach Anspruch 1 oder 2, **dadurch gekennzeichnet, dass** der oder jeder Leckageweg (12) eine Rille oder Nut (12') umfasst, die in der Bodenwand (10) ausgebildet ist und sich außen und in Umfangsrichtung um das umlaufende Dichtungsmittel (11) des betreffenden Zirkulationsvolumens (8) erstreckt, dabei vorteilhafterweise die Kontur des Mittels (11) annimmt, und dadurch, dass mindestens eine, vorteilhafterweise mehrere Öffnung(en) (12"), die durch die Bodenwand (10) des Gehäuses hindurchgehen, im Boden der Rille (12') ausgebildet ist (sind).

4. Batterieeinheit nach einem der Ansprüche 1 bis 3, **dadurch gekennzeichnet, dass** jedes Flächenelement (7) mit erhöhter Wärmeleitfähigkeit und in Plättchenform einen Rand aufweist, der einen einstückigen oder durch Überformung aufgesetzten umlaufenden Rahmen (13) bildet, der mit der Bodenwand (10) des Gehäuses (3) fest verbunden ist, wobei der Bodenwandabschnitt (10) gegenüber dem Flächenelement (7) ein Flächenelement (9) mit geringer Wärmeleitfähigkeit bildet und sich die Befestigungszone (14) zwischen dem Rahmen (13) und der Bodenwand (10), zum Beispiel eine Schweißverbindungszone, um und in einem Abstand von dem umlaufenden Dichtungsmittel (11) des betroffenen Zirkulationsvolumen (8) erstreckt.

5. Batterieeinheit nach Anspruch 4, **dadurch gekennzeichnet, dass** sich der Leckageweg (12) jeder Austauschzone (6') zwischen der Befestigungszone (14) und dem umlaufenden Dichtungsmittel (11) erstreckt.

6. Batterieeinheit nach einem der Ansprüche 1 bis 5, **dadurch gekennzeichnet, dass** wenigstens einige oder alle Leckagewege (12) der verschiedenen Wärmeaustauschzonen (6') in Richtung einer Zone oder eines Einzelpunkts der Bodenwand (10) des Gehäuses (3) konvergieren, die bzw. der mit einer Ablauföffnung (12") versehen ist.

7. Batterieeinheit nach Anspruch 6, **dadurch gekennzeichnet, dass** die Konvergenzzone bzw. der Konvergenzpunkt der Strömungen aus mehreren oder allen Leckagewegen (12) mit einem Detektor für das Vorhandensein von Wärmeübertragungsfluid (FC) ausgestattet ist.

8. Batterieeinheit nach einem der Ansprüche 1 bis 7, **dadurch gekennzeichnet, dass** das Dichtungsmittel (11) aus einer Dichtung (14) besteht, die im zusammengedrückten Zustand zwischen den miteinander fest verbundenen umlaufenden Rändern der zwei Flächenelemente (7 und 9) vorhanden ist, wobei diese Dichtung (14) vorzugsweise in einer Rille (11') der Bodenwand (10) untergebracht ist.

9. Batterieeinheit nach einem der Ansprüche 1 bis 8, **dadurch gekennzeichnet, dass** jedes Flächenelement (9) einer verstärkten Zone oder einer Vertiefung der Bodenwand (10) des Gehäuses (3) entspricht, die seitlich von angehobenen Rändern (9") begrenzt ist, auf denen im Wesentlichen ein Flächenelement (7) in Form eines wärmeleitenden Plättchens aufliegt, wobei dazwischen ein Dichtungsmittel (11) eingefügt ist.

10. Batterieeinheit nach einem der Ansprüche 1 bis 9, **dadurch gekennzeichnet, dass** jedes Flächenelement (7) mit erhöhter Wärmeleitfähigkeit in Plättchenform mit der Bodenwand (10) des Gehäuses (3) fest verbunden ist, einerseits in Umfangsrichtung an einer Befestigungszone (14), vorzugsweise durchgehend und zum Beispiel durch Schweißen, und andererseits an mindestens einer Anbindungszone (15), die sich innerhalb der Fläche des Plättchens (7) befindet, vorteilhafterweise an einer Mehrzahl von Anbindungszonen (15), die auf der Fläche des Plättchens (7) vorzugsweise regelmäßig verteilt sind.

11. Batterieeinheit nach einem der Ansprüche 1 bis 10, **dadurch gekennzeichnet, dass** jedes Flächenelement (7) mit erhöhter Wärmeleitfähigkeit und in Plättchenform mit einem Abschnitt der Bodenwand (10) des Gehäuses (3) fest verbunden ist, der ein Flächenelement (9) mit geringer Wärmeleitfähigkeit bildet, und zwar an mindestens einer Anbindungszone (15), vorzugsweise einer Mehrzahl von Anbindungszonen (15), die gleichmäßig verteilt sind, wobei jede Anbindungszone (15) aus einer in Richtung des Wandabschnitts (10) hervorstehenden lokalen Verformung (16) des Flächenelements (7) in Metallplättchenform besteht, wobei die Verformung (16) von einem Material (16') überformt ist, das mit dem Material des Bodenwandabschnitts (10) kompatibel ist, zum Beispiel für eine Verbindung durch Laserschweißen.

12. Batterieeinheit nach einem der Ansprüche 1 bis 11, **dadurch gekennzeichnet, dass** eins der zwei gegenüber liegenden Flächenelemente (7 und 9), die miteinander ein Zirkulationsvolumen (8) für Wärmeübertragungsfluid (FC) einer Wärmeaustauschzone (6'), vorteilhafterweise rechteckiger und ebener Form, definieren, eine Rippe (17) aufweist, die das Volumen (8) in zwei Schenkel eines Elementarabschnitts eines Zirkulationskreises (4') in U-, S- oder Schlangenform unterteilt.

13. Batterieeinheit nach einem der Ansprüche 1 bis 12, **dadurch gekennzeichnet, dass** die Zirkulationsvolumen (8) der Wärmeaustauschzone oder der verschiedenen Wärmeaustauschzonen (6') Abschnitte eines oder mehrerer Kreise (4) zur Zirkulation von Wärmeübertragungsfluid (FC) bilden, der oder die in die Struktur des Gehäuses (3) integriert ist bzw. sind, wobei die Kreisabschnitte (4) fluidisch in Reihe geschaltet sind oder nicht und an Verteilungs-/Sammelrohre (5', 5") angeschlossen sind, die zu einem Speise-/Ablaufkreis (5) für flüssiges Wärmeübertragungsfluid (FC) gehören, wobei diese Kreise (4 und 5) die Mittel zur Regelung der Temperatur der Zellen (2) bilden.

14. Batterieeinheit nach einem der Ansprüche 1 bis 13, **dadurch gekennzeichnet, dass** das Gehäuse (3) aus einem Kunststoff hergestellt ist und eine untere Wanne (18) umfasst, mit einer Bodenwand (10) und einem oberen Deckel (19), die in Umfangsrichtung zusammengesetzt sind, vorzugsweise durch Verschraubung und eventuell unter Einfügung einer Dichtung an einem Kontaktstreifen (3") .

15. Batterieeinheit nach Anspruch 14, **dadurch gekennzeichnet, dass** der Deckel (19) ebenfalls in seiner Struktur eine oder mehrere Zonen (6') zum Wärmeaustausch zwischen wenigstens einigen der, vorzugsweise allen Zellen (2) und dem Wärmeübertragungsfluid (FC) enthält, wobei die oder jede Wärmeaustauschzone (6') des Deckels (19) ein Volumen (8) zur Zirkulation von Wärmeübertragungsfluid (FC) umfasst und durch die Zusammenwirkung einer Ausformung oder Verstärkung der Wand (19') des Deckels (19), die ein Flächenelement (9) mit geringer Wärmeleitfähigkeit bildet, mit einem Flächenelement (7) mit erhöhter Wärmeleitfähigkeit in Plättchenform und in Kontakt mit Zellen (2), zum Beispiel allen Zellen (2) eines Moduls (2'), gebildet ist.

16. Batterieeinheit nach Anspruch 14 oder 15, **dadurch gekennzeichnet, dass** eine Platte oder ein Blatt (26), die bzw. das flexibel und wärmeleitend ist, zwischen das oder die Flächenelement (e) (7) mit erhöhter Wärmeleitfähigkeit der Wärmeaustauschzone(n) (6'), die in den Deckel (19) und/oder den Boden der Wanne (18) integriert sind, einerseits, und die betroffenen Flächen der Zellen (2) der Module (2'), die gegenüber liegen, andererseits, eingefügt ist.

17. Batterieeinheit nach einem der Ansprüche 1 bis 16, **dadurch gekennzeichnet, dass** jede Wärmeaustauschzone (6') ein Volumen (8) zur Zirkulation von Wärmeübertragungsfluid (FC) umfasst, das einen U- oder schlangenförmigen Kreisabschnitt bildet, dessen zwei freie Enden der zwei Schenkel mit Verteilungs-/Sammelleitungen (5, 5") fluidisch verbunden sind, die zu einem Speise-/Ablaufkreis (5) für Wärmeübertragungsfluid (FC) gehören.

18. Batterieeinheit nach einem der Ansprüche 1 bis 17, **dadurch gekennzeichnet, dass** die Mittel (4, 5) zur Regelung der Temperatur Verteilungs- (5')/Sammelrohre (5") umfassen, die einen oder mehrere Speise-/Ablaufkreise für flüssiges Wärmeübertragungsfluid (LC) bilden, wobei diese Rohre (5', 5") strukturell ins Gehäuse (3) integriert sind, ebenso wie Sekundär- oder Abzweigleitungen (20), die die Rohre (5', 5") mit den Zirkulationsvolumen (8) der Wärmeaustauschzonen (6') verbinden, wobei diese Rohre (5', 5") und Leitungen (20) wenigstens teilweise einstückig mit der Wand (3') des Gehäuses (3) ausgebildet sind.

19. Batterieeinheit nach Anspruch 18, **dadurch gekennzeichnet, dass** die röhrenförmigen Wände der Rohre (5', 5") und der Leitungen (20) einerseits teilweise in und/oder auf der Wand (3') des Gehäuses (3), vorzugsweise allgemein im Wesentlichen rechteckig parallelepipedförmig, und andererseits teilweise von überformtem Material (21) und/oder Wandabschnitten gebildet sind, die durch Vibrations- oder Laserschweißen aufgesetzt und zusammengesetzt sind.

20. Batterieeinheit nach einem der Ansprüche 18 und 19, **dadurch gekennzeichnet, dass** der oder jeder Speise-/Ablaufkreis (5) ein Anschlussstück (22) für das oder die Verteilungsrohr(e) (5') und ein Anschlussstück (22') für das oder die Sammelrohr (e) (5") umfasst, wobei ein gemeinsamer Kreis (5) oder getrennte Kreise (5) vorteilhafterweise für die Zirkulationsvolumen (8) der Wärmeaustauschzonen (6') vorgesehen ist bzw. sind.

21. Batterieeinheit nach einem der Ansprüche 14 bis 16 oder einem der Ansprüche 17 bis 20, sofern sie mit Anspruch 14 in Verbindung stehen, **dadurch gekennzeichnet, dass** die untere Wanne (18) eine Verstärkungsstruktur umfasst, die in den Körper der Wanne (18) integriert ist, zum Beispiel vom thermoplastischen Material überformt ist, das die Wand der Wanne (18) bildet.

22. Batterieeinheit nach einem der Ansprüche 14 bis 16 oder einem der Ansprüche 17 bis 20, sofern sie mit Anspruch 14 in Verbindung stehen, **dadurch gekennzeichnet, dass** die Wanne (18) eine Verstärkungsstruktur (23) umfasst, die außen formschlüssig mit der thermoplastischen Wand der unteren Wanne (18) zusammenwirkt, zum Beispiel vom Typ eines Rahmens, der der Wanne (18) insbesondere eine mittlere und umlaufende Versteifung verleiht.

23. Batterieeinheit nach einem der Ansprüche 14 bis 16 oder einem der Ansprüche 17 bis 20, sofern sie mit Anspruch 14 in Verbindung stehen, **dadurch gekennzeichnet, dass** die untere Wanne (18) mindestens eine Unterteilungs-Innenwand (24) umfasst, die sich einstückig vom Boden der Wanne (18) erstreckt, vorteilhafterweise mit einer Verstärkungsstruktur (23) zusammenwirkt und gegebenenfalls Volumen (8) zur Zirkulation von Wärmeübertragungsfluid (FC) enthält, wobei diese Volumen (8) vorzugsweise zu den Zirkulationsmitteln (4) der Wanne (18) gehören und fluidisch mit den Verteilungsmitteln (5) verbunden sind.

24. Batterieeinheit nach einem der Ansprüche 1 bis 23, **dadurch gekennzeichnet, dass** ein Mittel (25) zur Steuerung der Temperatur, der Zirkulation und/oder Verteilung der Wärmeübertragungsflüssigkeit strukturell, ja sogar materiell wenigstens teilweise ins Gehäuse (3) integriert ist.

25. Kraftfahrzeug, insbesondere Elektro- oder Hybridkraftfahrzeug, **dadurch gekennzeichnet, dass** es mindestens eine Batterieeinheit (1) nach einem der Ansprüche 1 bis 24 umfasst, wobei diese Batterieeinheit (1) ferner mindestens ein Innentemperatur-Messmittel, Mittel zur elektrischen Verbindung der Zellen oder Elemente (2) miteinander und Außenanschlussmittel aufweist, wobei letztere vorteilhafterweise teilweise mit oder in der Wand (3', 10) des Gehäuses (3) ausgebildet sind.

## Claims

1. Battery unit (1), notably for a hybrid and/or electric motor vehicle, essentially comprising, on the one hand, a plurality of cells (2) or battery elements, if necessary physically and/or electrically grouped together in several blocks or modules (2'), on the other hand, a housing (3) accommodating and surrounding said cells or elements (2) and, finally, means (4, 5) for regulating the temperature of said cells or elements (2) by circulation of a heat-transfer fluid (FC),
comprising, at least in a bottom region (6) on which the cells (2) are arranged, at least one, preferentially several, heat exchange zones (6') between said cells (2) and the heat-transfer fluid (FC), said zone or zones (6') being incorporated in the structure of said housing (3), preferentially in the wall (3') thereof,
the or each exchange zone (6') comprising a surface element (7) with high thermal conductivity in contact with cells (2), on the one hand, and the heat-transfer fluid (FC), on the other hand, and,
the surface element (7) with high thermal conductivity being an element added in the housing (3), and consisting of a metal plate, or of a similar material that is rigid and a good heat conductor, secured fluidtightly with a surface element (9) with low thermal conductivity, each surface element (9) with low thermal conductivity of the or each exchange zone (6') forming an integral part of the housing (3) and advantageously forming a portion of the wall (3', 10, 11') thereof, said battery unit (1) being **characterized in that** the or each exchange zone (6') comprises a volume (8) for circulation of heat-transfer fluid (FC), defined between a surface element (7) with high thermal conductivity, in direct contact with cells (2), and a surface element (9) with low thermal conductivity, in contact with the outside environment, and consisting of a portion of the bottom wall (10) of the housing (3), and **in that** the or each circulation volume (8) is delimited laterally or peripherally by a sealing means (11) arranged between the two elements (7 and 9) considered, a leak path (12) being formed around the surface element (9) concerned, allowing the outward discharge of any heat-transfer liquid (FC) leaking if necessary from the targeted volume (8).

2. Battery unit according to Claim 1, **characterized in that** the or each leak path (12) is formed in the bottom wall (10) of the housing (3) and extends continually around the peripheral sealing means (11) of the circulation volume (8) concerned, which preferentially corresponds to a flat and planar chamber.

3. Battery unit according to Claim 1 or 2, **characterized in that** the or each leak path (12) comprises a groove or score (12') formed in the bottom wall (10) and which extends externally and circumferentially around the peripheral sealing means (11) of the circulation volume (8) considered, advantageously closely following the outline of said means (11), and **in that** at least one, preferentially several, orifices (12'') passing through the bottom wall (10) of the housing is/are formed in the bottom of said groove (12').

4. Battery unit according to any one of Claims 1 to 3, **characterized in that** each surface element (7) with high thermal conductivity and in the form of a plate comprises an edge forming a peripheral frame (13), in a single piece or added by overmolding, secured with the bottom wall (10) of the housing (3), the portion of bottom wall (10) facing the surface element (7) forming a surface element (9) with low thermal conductivity and the securing zone (14) between the frame (13) and the bottom wall (10), for example a weld link zone, extending around and at a distance from the peripheral sealing means (11) of the circulation volume (8) concerned.

5. Battery unit according to Claim 4, **characterized in that** the leak path (12) of each exchange zone (6') extends between the securing zone (14) and the peripheral sealing means (11).

6. Battery unit according to any one of Claims 1 to 5, **characterized in that** at least some or all of the leak paths (12) of the different heat exchange zones (6') converge toward a zone or a single point of the bottom wall (10) of the housing (3), provided with a discharge orifice (12'').

7. Battery unit according to Claim 6, **characterized in that** the zone or the point of convergence of the flows originating from several or all of the leak paths (12) is equipped with a detector of the presence of heat-transfer liquid (FC).

8. Battery unit according to any one of Claims 1 to 7, **characterized in that** the sealing means (11) consists of a seal (14) present, in the compressed state, between the mutually secured peripheral edges of the two surface elements (7 and 9), this seal (14) being preferentially housed in a groove (11') of the bottom wall (10).

9. Battery unit according to any one of Claims 1 to 8, **characterized in that** each surface element (9) corresponds to a depressed zone or a depression of the bottom wall (10) of the housing (3), delimited laterally by raised edges (9'') on which a surface element (7) in the form of a thermally conductive plate is substantially arranged, with the interposition of a sealing means (11).

10. Battery unit according to any one of Claims 1 to 9, **characterized in that** each surface element (7) with high thermal conductivity in the form of a plate is secured with the bottom wall (10) of the housing (3), on the one hand, peripherally in a securing zone (14), preferentially continually and for example by welding, and, on the other hand, in at least one bonding zone (15) situated inside the surface of said plate (7), advantageously in a plurality of bonding zones (15) distributed over the surface of said plate (7), preferentially regularly.

11. Battery unit according to any one of Claims 1 to 10, **characterized in that** each surface element (7) with high thermal conductivity and in the form of a plate is secured with a portion of the bottom wall (10) of the housing (3) forming a surface element (9) with low thermal conductivity, and is so secured in at least one bonding zone (15), preferentially a plurality of evenly distributed bonding zones (15), each bonding zone (15) consisting of a local deformation (16), protruding toward the portion of wall (10), of the surface element (7) in the form of a metal plate, said deformation (16) being overmolded by a material (16') compatible with the material of said portion of bottom wall (10) for a bond by laser welding for example.

12. Battery unit according to any one of Claims 1 to 11, **characterized in that** one of the two surface elements (7 and 9) facing one another, defining between them a circulation volume (8) for heat-transfer fluid (FC) of a heat exchange zone (6'), advantageously of rectangular form and flat, has a rib (17) subdividing said volume (8) into two branches of an elementary portion of a U-shaped, S-shaped or serpentine circulation circuit (4').

13. Battery unit according to any one of Claims 1 to 12, **characterized in that** the circulation volumes (8) of the different heat exchange zone or zones (6') form portions of one or several circuits (4) for circulation of heat-transfer fluid (FC), incorporated in the structure of the housing (3), said portions of circuit (4) being fluidically linked in series, or not, and connected to distribution/collection ducts (5', 5'') forming part of a circuit (5) for supplying/discharging heat-transfer fluid liquid (FC), these circuits (4 and 5) forming the means for regulating the temperature of the cells (2).

14. Battery unit according to any one of Claims 1 to 13, **characterized in that** the housing (3) is made of a plastic material and comprises a bottom tray (18), with a bottom wall (10), and a top cover (19) assembled peripherally to one another, preferentially by screwing, and possibly with the interposition of a seal, in a contact strip (3").

15. Battery unit according to Claim 14, **characterized in that** the cover (19) also incorporates, in its structure, one or more heat exchange zones (6') between at least some, preferably all, of the cells (2) and the heat-transfer fluid (FC), the or each heat exchange zone (6') of the cover (19) comprising a volume (8) for circulation of heat-transfer fluid (FC) and being formed by the cooperation of a formation or depression of the wall (19') of the cover (19), forming a surface element (9) with low thermal conductivity, with a surface element (7) with high thermal conductivity, in the form of a plate and in contact with cells (2), for example all the cells (2) of a module (2').

16. Battery unit according to Claim 14 or 15, **characterized in that** a flexible and thermally conductive plate or leaf (26) is inserted between the surface element or elements (7) with high thermal conductivity of the heat exchange zone or zones (6') incorporated in the cover (19) and/or the bottom of the tray (18), on the one hand, and the faces concerned of the cells (2) of the modules (2') opposite, on the other hand.

17. Battery unit according to any one of Claims 1 to 16, **characterized in that** each heat exchange zone (6') comprises a volume (8) for circulation of heat-transfer fluid (FC) forming a portion of U-shaped or serpentine circuit, in which the two free ends of the two branches are fluidically linked to distribution/collection lines (5, 5'') forming part of a circuit (5) for supplying/discharging heat-transfer fluid (FC).

18. Battery unit according to any one of Claims 1 to 17, **characterized in that** the temperature regulation means (4, 5) comprise distribution (5')/collection (5'') ducts forming one or more circuits for supplying/discharging heat-transfer fluid liquid (LC), these ducts (5', 5'') being structurally incorporated in the housing (3), and secondary or tapping lines (20) linking said ducts (5', 5'') to the circulation volumes (8) of the heat exchange zones (6'), these ducts (5', 5'') and lines (20) being at least partially formed in a single piece with the wall (3') of the housing (3).

19. Battery unit according to Claim 18, **characterized in that** the tubular walls of the ducts (5', 5'') and of the lines (20) are formed, on the one hand, partially in and/or on the wall (3') of the housing (3), preferentially of generally substantially rectangular parallelepipedal form, and, on the other hand, partially by the overmolded material (21) and/or portions of wall attached and assembled by vibration or laser welding.

20. Battery unit according to either of Claims 18 and 19, **characterized in that** the or each supply/discharge circuit (5) comprises a connection end-fitting (22) for the distribution duct or ducts (5') and a connection end-fitting (22') for the collection duct or ducts (5''), a common circuit (5) or separate circuits (5) being advantageously provided for the circulation volumes (8) of the heat exchange zones (6').

21. Battery unit according to any one of Claims 14 to 16, or any one of Claims 17 to 20 insofar as they relate to Claim 14, **characterized in that** the bottom tray (18) comprises a reinforcing structure incorporated in the body of the tray (18), for example overmolded by the thermoplastic material forming the wall of said tray (18).

22. Battery unit according to any one of Claims 14 to 16, or any one of Claims 17 to 20 insofar as they relate to Claim 14, **characterized in that** the tray (18) comprises a reinforcing structure (23) cooperating externally, by conjugation of forms, with the thermoplastic wall of the bottom tray (18), for example of frame type notably providing a median and peripheral stiffening of said tray (18).

23. Battery unit according to any one of Claims 14 to 16, or any one of Claims 17 to 20 insofar as they relate to Claim 14, **characterized in that** the bottom tray (18) comprises at least one subdividing inner wall (24), extending in a single piece from the bottom of the tray (18), cooperating advantageously with a reinforcing structure (23) and incorporating, if necessary, volumes (8) for circulation of heat-transfer fluid (FC), these volumes (8) preferentially forming part of the circulation means (4) of the tray (18) and fluidically linked to the distribution means (5).

24. Battery unit according to any one of Claims 1 to 23, **characterized in that** a means (25) for controlling the temperature, the circulation and/or the distribution of the heat-transfer liquid is incorporated structurally, even physically, at least partly in the housing (3).

25. Motor vehicle, in particular electric or hybrid, **characterized in that** it comprises at least one battery unit (1) according to any one of Claims 1 to 24, this battery unit (1) also comprising at least one internal temperature measurement means, means for electrically connecting cells or elements (2) to one another and external connection means, the latter being advantageously partially formed with or in the wall (3', 10) of the housing (3).
